Europäisches Patentamt

European Patent Office

Office européen des brevets

(19)

(11) **EP 0 907 913 B1**

(12) **EUROPEAN PATENT SPECIFICATION**

(45) Date of publication and mention
of the grant of the patent:
**26.06.2002 Bulletin 2002/26**

(51) Int Cl.7: **G05B 23/02**

(86) International application number:
**PCT/CA97/00266**

(21) Application number: **97917186.5**

(22) Date of filing: **22.04.1997**

(87) International publication number:
**WO 97/41494 (06.11.1997 Gazette 1997/47)**

(54) **AUTOMATIC CONTROL LOOP MONITORING AND DIAGNOSTICS**

SYSTEM ZUR ÜBERWACHUNG UND DIAGNOSE VON AUTOMATISCHEN REGELSCHLEIFEN

CONTROLE AUTOMATIQUE DE BOUCLE DE REGULATION ET METHODE DIAGNOSTIQUE

(84) Designated Contracting States:
**DE ES FI FR SE**

(30) Priority: **29.04.1996 GB 9608953**
**23.09.1996 US 722920**

(43) Date of publication of application:
**14.04.1999 Bulletin 1999/15**

(73) Proprietor: **Pulp and Paper**
**Research Institute of Canada**
**Quebec H9R 3J9 (CA)**

(72) Inventor: **OWEN, James, Gareth**
**West Chester, Ohio (US)**

(74) Representative: **Archer, Philip Bruce**
**Urquhart-Dykes & Lord**
**European Patent Attorneys**
**New Priestgate House**
**57 Priestgate**
**Peterborough Cambridgeshire PE1 1JX (GB)**

(56) References cited:
**EP-A- 0 297 951          EP-A- 0 481 971**
**WO-A-93/06537          FR-A- 2 698 470**
**US-A- 4 642 782          US-A- 5 239 456**
**US-A- 5 442 549**

**Description**

FIELD OF THE INVENTION:

The present invention relates to apparatus and methods for detecting and diagnosing malfunctions in process control systems for large, complex and continuous manufacturing systems such as a pulp and paper mill.

BACKGROUND TO THE INVENTION:

In a modern large and complex continuous manufacturing system there are typically many hundreds of physical quantities being automatically controlled by a computerized system employing on-line data acquisition, decision making, and physical adjustment of actuators. The main purpose of such a control system, apart from performing the basic sequential tasks necessary to run the process, is to maintain optimal operating conditions by minimizing the effect of natural fluctuations (such as raw material variations) on the quantities under control. Several common sources of control system malfunction can disrupt this basic objective of the control system, without necessarily triggering process alarms or other indications of failure. Causes of malfunctions can include: poor choice of control algorithm or tuning constants, valve stiction, deterioration of sensors, or a poor initial choice of control strategy. These types of incipient problems can persist undetected, often with severe negative economic consequences which stem from loss of product uniformity or sub-optimal operating conditions. The extent of this type of malfunction can be very great when there are many variables are under control and maintenance resources are limited. For instance, in a typical integrated pulp and paper mill 20-60% of the 1000-5000 variables under automatic control may be contributing some additional variation due to various types of control malfunction as noted in "Dreams vs Reality: A View from Both Sides of the Gap", by W. L. Bialkowski, and "Control Systems 92, Whistler, B.C., A Mill Prototype for Automatic Monitoring of Control Loop Performance", Pulp and Paper Report, Paprican, by J.G. Owen, D. Read, H. Blekkenhorst, and A.A. Roche.

In most industrial plants the vast majority of variables under control are regulated individually by manipulation of a single process input. As such, the process control system can be thought of as being divided into separate units or "control loops", each responsible for the control of a separate quantity. Consequently, tracing the source of a control system malfunction requires localization of the effected loop from among the many hundreds of control loops in the plant.

The primary symptom of process control malfunctions is increased variability in the quantity under control. Consequently, much of the prior art has used various manifestations of elevated levels of variance to locate malfunctioning control loops, e.g., U.S. Patent 4,885,676 and U.S. Patent 5,249,119. The drawback of the approach is that changes in the level of variability contributed by malfunctions of the process control system cannot be distinguished from the effects of changes produced by other external perturbations such as those arising from raw material variations or turbulent flows.

Another approach taken in the prior art is the direct detection of a subclass of control malfunctions caused by valve or actuator failure, e.g., U.S. Patent 5,329,465 and U.S. Patent 3,829,848. The scope of these techniques, however, is limited to a particular type of malfunction, and special instrumentation must be installed and connected to each actuator or valve to be monitored.

Extensive material has been published in the academic literature, describing various methods for control loop monitoring and diagnostics. Much of this literature has focused on ways to overcome the limitation of techniques based on measuring the absolute level of variability previously mentioned. For instance, in "Automatic Monitoring of Control Loop Performance", by T. Hagglund, Control systems '94 a procedure to detect process variable oscillations resulting from control loop malfunctions is presented. However, both this technique and classical techniques based on detection of power spectrum resonances, are limited to detection of control malfunctions which induce oscillation and where there is an absence of inter-loop interaction (see below). A major step towards a more general and robust method of quantification of control loop performance was made in the paper "Assessment of Control Loop Performance", by T.J. Harris, Can. J. Chem. Eng., 67, pp. 856-861, 1989. Harris proposed assessing control performance using a comparative measure of variance. This performance index was defined as the ratio of the observed level of variance of a controlled variable to the minimum variance achievable by a minimum variance controller. Harris further devised a means of computing the index from observation of the closed-loop operating data (i.e. without requiring any invasive process perturbation) and an estimate of the delay between the process input and output. As a single number, this index provided a very easily interpreted quantification of loop performance, ideal for use in a computer method for detecting control malfunctions. Furthermore, the technique for evaluating the index has the advantage of being unaffected by fluctuations in the intensity of external disturbance, since such changes effect both the observed variance and the minimum variance estimate by the same factor.

These advantages prompted other researchers to generalize the techniques. For instance in "Performance Assessment Measures for Univariate Feedback Control", by L.D. Desborough and T.J. Harris, Can, J. Chem. Eng, 70, pp. 1186-1197, 1992, a method of estimating a normalized form of Harris' index is presented, together with the statistical properties of the estimator. In "Performance Assessment Measures for Univariate Feedforward/Feedback Control", by L.D. Desborough and T.J. Harris, Can, J. Chem. Eng, 71, pp. 605-616, 1993, these results are extended to include performance assessment of single loop feedback in combination with feedforward control. Industrial application of these techniques is described in "Towards Mill-Wide Evaluation of Control Loop Performance", by M. Perrier and A. Roche, Control Systems '92, and "An Expert System for Control Loop Analysis", by P. Jofriet, C. Seppala, M. Harvey, B. Surgenor, T. Harris, Preprints of the CPPA Annual Meeting, 1995. In "Monitoring and Diagnosing Process Control Performance: The Single Loop Case" by N. Stanfelj, T. Marlin and J. MacGregor, Proc. of the American Control Conference, pp. 2886-2892, 1991, these techniques are further investigated, and a method for distinguishing excess variability due to poor control design from that due to poor model estimation is presented for cases where there is continuous set point variation.

The ability of these techniques to distinguish elevated variability arising from changes in external disturbances from that due to control malfunctions is limited however to cases where only the intensity rather than the fundamental character of the external disturbances changes. The assessment of performance is in fact biased when the character of those disturbance is changed, for example due to a malfunction in the control of another quantity which is dynamically related to the controlled variable. This phenomenon is illustrated in Examples 1 and 2. This effect could conceivably be overcome by the use of a direct multivariable extension of the Harris index and its method of computation. The practical difficulty with such a generalization is that it would require practical extensive process modelling and experimentation in order to find the multi variable extension of the process delay, i.e., the process interactor transfer function matrix. The complexity and cost of this type of extensive modelling would make this approach unsuitable for large scale industrial implementation. Another source of bias in control loop performance assessment using these techniques is the effect of temporary upsets in the process which induce nonstationary disturbances to the loop under consideration, in violation of the prior assumptions made by Harris and other prior contributors to the prior art. Yet another bias in the evaluation of performance can occur for malfunctions which are induced by a non-linearity in the loop under assessment, such as that caused by high levels of friction in a valve or actuator. This bias has its roots in the violation of the assumption of approximate process linearity made in the prior art, which fails to hold for this class of control malfunctions. These commonly occurring non-ideal conditions will cause any method based on the techniques described in the above papers to yield false positive and false negative indications of control loop malfunction.

There are a number of techniques available in the commercial domain for testing of valves and actuators for functional defects such as stiction. Some of these techniques have been mentioned in various forms in the open literature, e.g., "Intelligent Actuators - Ways to Autonomous Actuating Systems", by R. Isermann and U. Raab, Automatica, 29, #5, pp. 1315-1331, 1993 and U.S. Patent 3,829,848. All employ some variant of the following procedure:

a) the controller output is moved according to some preset sequence;
b) the response, either or the valve itself or some other measurement of the process condition, is tested for departures from a "normal" characteristic;
c) any detected departures provide a diagnostic.

This type of technique can be automated so that the procedure is performed on-line. The drawback is that the invasive probing of the valve carries a risk of causing upsets and generating additional process variability. On the other hand, if routine controller output signals to the valve or actuator are to be used instead of a probing signal, then a continuous measurement related to the actuator/valve position must be available in addition to the quantity being controlled. This restriction is a consequence of the fact that the relationship between the calculated controller output or desired process input and the measured controlled variable is completely explained by the control method itself when the process is operating in closed-loop; as such it can reveal no information about the process in the absence of any set-point adjustments. Hence, variants of the above techniques which use routine data to monitor valves or actuators require a second measurement point which is strongly related to the actuator valve position and not completely dependent on the computed centralization.

It has been noted in the academic literature that nonlinear elements in a control loop will induce limit cycles in process variables which have a non-normal distribution. The pioneering work in this area was done by Fuller in "Analysis of Nonlinear Stochastic Systems by Means of the Fokker-Planck Equation", by A.T. Fuller, Int. J. Control, 9, 6, pp. 603-655, 1969 who derived partial differential equations describing the dependence of the controlled variable probability density function on the process dynamics and the nonlinearity. These equations were simplified in "Approximate Analysis of Nonlinear Systems Driven by Gaussian White Noise", by D. Xue and D. Atherton, Proc. Of the American Control Conference, pp. 1075-1079, 1992 for some common process models and memoryless nonlinearities with disturbances represented by white noise. In both cases this work is of a theoretical nature, and was confined to derivation of the probability density function for known process models. Tests for non-normality of the probability density function of a time-series using estimation of the 4th moments have also beep proposed in the open literature for other purposes, for example "The theory of Statistics", by G.U. Yule and M.G. Kendall, Griffin, 1953. However, this type of test is limited by the requirement that the observations of the time-series be independent, a condition which is never satisfied for the time series generated by the measured value of a limit cycling control loop. A non-normality test using this technique was also proposed in U.S. Patent 5,239,456 "Method and Apparatus for Process Control with Optimum Setpoint Determination". The purpose of the test as it was proposed in this patent was to provide an alarm if the key technical assumption of the patented technique failed to hold; it was not used to provide a control system diagnostic.

There is disclosed in WO 93/06537 (document D1) (UK Atomic Energy Authority) a monitoring system for a plant or apparatus in which status signals are used to indicate if respective parameters of the plant or apparatus represent an acceptable state. The system detects fault conditions. A desired sequence of output signals is provided as long as the parameters remain in acceptable states. The system does not disclose any means for providing a diagnostic function in relation to a detected fault condition.

There is disclosed in EP-B-0 481 971 (document D2) (Johnson Service Company) a control system for a stamping press which disables the press in the event of unacceptable force variations. The disclosed method comprises data comparison and generating control signals to control the press in accordance with the comparison. Upon detection of out of tolerance conditions an alarm is generated. There is not disclosed a system for diagnostic analysis of unacceptable conditions in the press.

SUMMARY OF THE INVENTION:

The present invention relates to a method of diagnostic differentiation as defined in the accompanying claims. In an embodiment, such a method is provided which permits automatic assessment of control loop performance in the multi-loop interactive and nonlinear dynamic environment typical of industrial settings. The embodiment localizes malfunctions in the process control system by analyzing operating data routinely recorded by the plant data acquisition system. The embodiment can also derive a diagnostic for malfunctions which have been localized, and can quantify the severity of any detected malfunction in terms of the amount of variability it contributes to the quantity under control.

Prior process data required for the analysis may include:

i.) an estimate of which groups of controlled variables may exhibit significant mutual dynamic interaction;
ii.) the delay between making a change at each controller output and observing the first sign of its effect on the controlled variable;
iii.) the "order or magnitude" of the open-loop time constant.

The latter two estimates are required for each control loop to be monitored. They may be obtained from routine data if frequent set-point changes are made; otherwise a "one-time-only" bump test may be required.

An embodiment of the present invention detects control malfunctions using the following procedure. Operating data is collected simultaneously from the preselected lists of loops judged likely to exhibit mutual interaction. This operating data comprises two time-series for each loop: the controlled variable measurement and the control loop set point. The data is collected over a period at least 100-500 times the longest open-loop time constant among the loops in the group. Two types of performance index may then be computed for each loop under separate assumptions about the state of disturbances acting on the loop. The "raw index" quantifies the amount by which the observed variance of the tracking error exceeds its minimum achievable value after any nonlinear elements have been removed from the loop. This index correctly quantifies performance where disturbances to the loop conform to normal external conditions. Prior estimates of the process delay and time constant are used to perform this calculation. The method then tests for any interactions between control loops which may be inflating the estimate of the raw index by perturbing the loop being analyzed in an abnormal manner. If such variation is detected for a particular loop a "modified index" is then computed. The modified index is an estimate of the same comparative measure of variability, but with the effect of potentially abnormal disturbances removed from the calculation. As such, the modified index is a valid measure of the loop performance under the assumption that the detected abnormal disturbance has external origin. Hence if a loop is deemed to be interacting with others in the group, the raw and modified indices reflect the status of loop performance under the contrasting assumptions that any interactive abnormal variation is internally or externally produced. Taken together, the two indices allow the user of the system to divide control loops into three categories: those definitely malfunctioning, those definitely not malfunctioning, and those which may be malfunctioning or being perturbed by interacting malfunctioning loops. Other information may also be used in this calculation to assist in making the distinction, as described under the preferred embodiments.

The diagnostic component of the embodiment proceeds by computing the histogram of the tracking error for each loop designated potentially malfunctioning (i.e., where the raw index exceeds some predefined level). The kurtosis and skewness of each histogram is then quantified by calculating the height of the center bar of the histogram relative to its expected height under the assumption that the tracking error is normally distributed with either zero or the sample mean and the sample variance. The skewness is quantified by comparing the number of samples in excess of either the sample mean or zero with the expected number (i.e., half the number of samples) under the same assumption. Under this null hypothesis, the statistical significance of any departure of either statistic from 0 is calculated, taking into account any inter-sample correlation of the tracking error time-series.

In accordance with an embodiment of the invention, a method of detecting malfunction of a process control system which includes at least one closed loop control loop is comprised of measuring a histogram of tracking error of the control loop, determining distortion of the tracking error relative to a Gaussian distribution, and indicating a malfunction in the process in the event a deviation from the Gaussian distribution of the tracking error exceeds predetermined limits, wherein the distortion (K) is measured by subtracting from a height of a tracking error histogram bar of the histogram centered on zero, a number of samples multiplied by an area between a pair of limits defining a normal density about a mean of the histogram, and then indicating a malfunction in the process in the event a value of K is different from O by a predetermined amount.

In accordance with another embodiment, a method of automatic assessment of control loop performance of an industrial machine is comprised of collecting operating data comprising time series of controlled variable measurements and control loop set points simultaneously from predetermined control loops, for a period of at least approximately 100 times a longest time constant of the predetermined control loops, subtracting measured variable data from set point data to obtain tracking errors, determining an amount by which observed variance of a tracking error exceeds an ideal minimum value achievable after non-linear elements have been removed from a loop, exploiting prior estimates of process delay and time constant in the calculation and representing the result as a raw index, testing for any interactions between control loops which may be inflating the estimate of the raw index in an abnormal manner, determining a modified raw index for a particular loop in the event the inflated estimates are detected, and distinguishing between control loops that are malfunctioning, those that are not malfunctioning, and those that are possibly malfunctioning and are perturbed by interacting malfunctioning control loops, based of the raw index and the modified raw index.

In accordance with another embodiment, a method of automatic assessment of control loop performance of and industrial machine is comprised of (a) identifying a current control loop in a group of control loops, (b) obtaining operating data and prior operating data for the control loop, (c) calculating a raw performance index for the control loop, (d) indicating the current control loop as potentially malfunctioning in the event the raw performance index is greater than a predetermined threshold, (e) in the event the control loop is indicated as potentially malfunctioning, computing a fast Fourier transform of a tracking error, and filter products of the transform to remove spurious peaks, (f) identifying primary and secondary spectral peaks contributing more than a threshold variance in a predetermined bandwidth for the control loop, (g) selecting another control loop in the group of control loops and repeat steps (a) - (g) until a last control loop in the group has been processed, (h) divide potentially malfunctioning loops with approximately coincident spectral peaks into possibly interacting classes, (i) determine a modified performance index for all control loops belonging to a class, and (j) apply a histogram test to spectral peaks of all control loops in a class to determine a category of malfunction.

In accordance with another embodiment, a method of determining a category of malfunction of a process is comprised of tracking error variations of narrow spectral bandwidth in each of plural control loops of the process, comparing spectral peaks of the error variations to detect coincidences of peaks which are indicative of interaction between the plural control loops, and quantifying effects of the error variations which have the coincidences of peaks, and as a result determining malfunctioning of a control loop.

BRIEF DESCRIPTION OF THE DRAWINGS:

Figure 1 shows a flow diagram indicating the sequence of calculations performed to calculate the raw index of performance for each loop,

Figure 2 shows a flow diagram indicating the general sequence of calculations performed by the method to locate and diagnose control loop malfunctions,

Figure 3 shows an example of a calculated power spectrum, with primary and secondary peaks identified, together with shaded areas corresponding to the variance associated with those peaks over the preset bandwidth,

Figure 4 shows the histogram of the tracking error for the flow controller malfunction of Example 1, which was known to be caused by valve stiction. The statistic used to quantify kurtosis is illustrated,

Figure 5 illustrates grouping of potentially malfunctioning control loops into an interacting equivalence class,

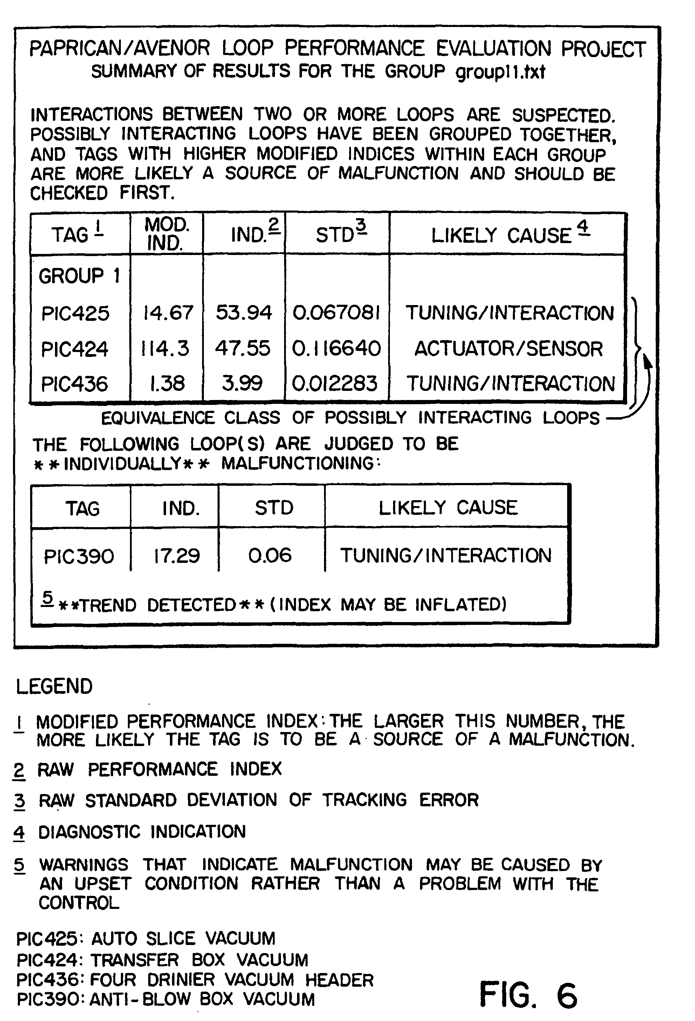

Figure 6 shows a sample text output of the method, indicating the partition of potentially malfunctioning loops into a subgroup where potential mutual interaction may be inflating performance indices,

Figure 7 shows graphs depicting prior wavelength estimates for closed-loop transfer function resonances for various process dynamics,

Figures 8A and 8B show a simulated random limit cycle with and without valve stiction, respectively, with predicted potential variability improvement using standard methods being compared to the variability improvement actually realized by removal of the source of simulated stiction,

Figures 9A and 9B show the flow and consistency time-series for Example 1,

Figure 10 show the flow and consistency power spectra for Example 1,

Figure 11 shows the two level time-series for Example 2,

Figure 12 shows the two level power spectra for Example 2,

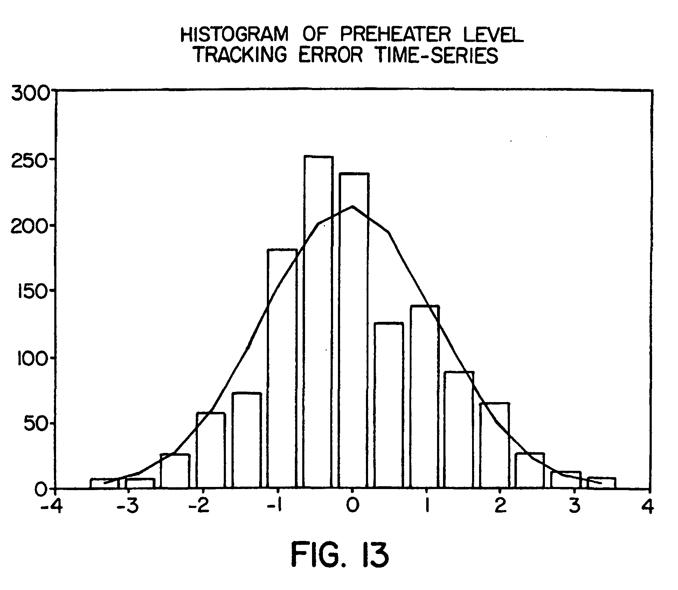

Figure 13 shows the histogram of the preheater level tracking error in Example 2,

Figures 14A and 14B are general block diagrams of an embodiment of the invention,

Figure 15 is a block diagram of the diagnostic calculation block of Figure 14,

Figure 16 is a block diagram of the performance evaluation block of Figure 14, and

Figure 17 is a block diagram of the spectral peak detector block of Figure 14.

DESCRIPTION OF THE PREFERRED EMBODIMENTS:

Upon setup of the control system which uses the present invention, prior or reference information on the process dynamics should be collected and organized. This information need be updated only when either changes are made to the process under control or to the choice of manipulated/controlled variable pairing; otherwise it does not change either between successive analyses performed with the method or between readjustments of the control tuning constants.

There are two structures for this prior information, one relating the inter-loop dynamics, the other representing dynamic information about each separate loop. Estimates of which controlled variables have the potential for significant mutual interaction are made at startup, based on a qualitative understanding of the process behaviour. This information is then used to partition control loops into groups which may exhibit significant intra-group mutual interaction, but where inter-group interaction is less likely or less pronounced. These partitions are then represented by a series of lists comprising names used by the control system for each control loop in the respective group. The method collects and processes data from control loops belonging to each list simultaneously. These lists constitute the first prior information structure.

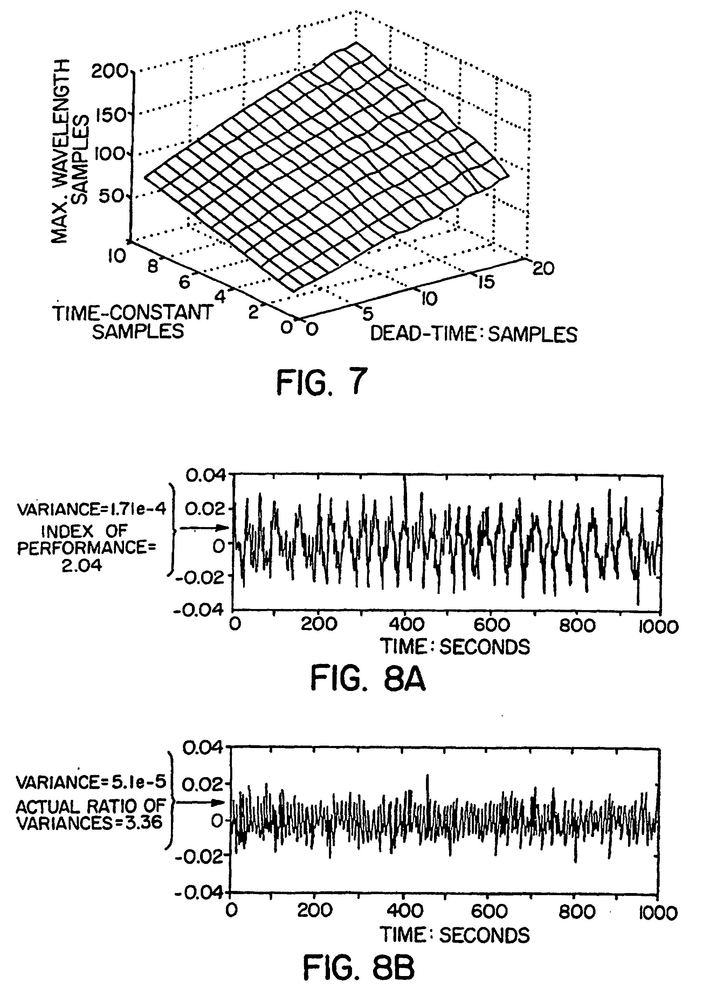

The second prior information structure is a file associated with each separate control loop containing an estimate of the delay between manipulated and controlled variables, the approximate open-loop process time constant, and the sample time. A further optional item that may be included is an allowable range for closed-loop resonant frequencies caused by poor tuning of the control. Upper and lower bounds on the frequency of any resonances caused by poor controller tuning, which are independent of the particular choice of tuning constants, can be found from prior open-loop dead-time and dominant time-constant estimates. Plots illustrating the dependence of these upper and lower limits on dead-time and open-loop time-constant are shown in Fig. 7, and the formula describing these surfaces is described later. The purpose of including these limits is that in some cases they can be used by the method to distinguish the effects of externally and internally imposed resonances in the controlled variable. Additional prior information pertaining to each individual loop may also be included as needed in these files, such as outlier limits for detecting abnormal process conditions.

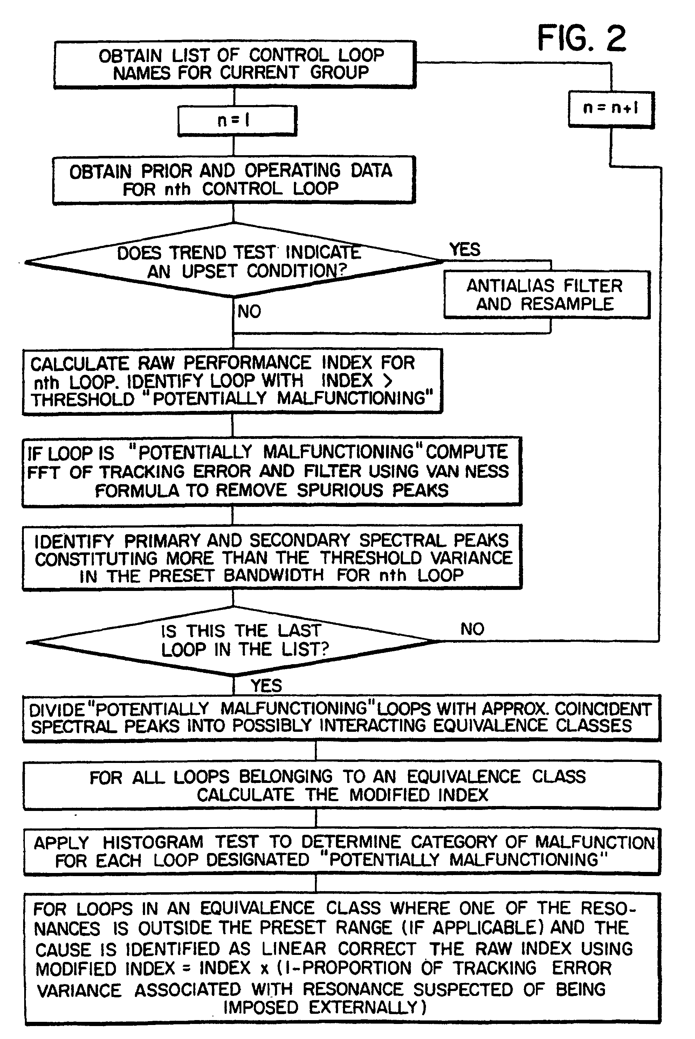

The method uses the prior information to interpret the data from each cycle of operating data acquisition and analysis. An overview of the sequence of actions taken during this cycle is shown in Fig. 2. After simultaneous extraction of the operating data from all the loops in a preselected group, the raw index of performance is calculated based on the computed tracking error (set point - controlled variable) for each loop. A generalization of the index proposed by Harris and others is used for this purpose:

$$\text{raw generalised index} = \frac{\text{observed tracking error variance}}{\text{minimum achievable variance with linear actuators and sensors}} \tag{1}$$

For control loops with predominantly linear elements, this index and its method of computation are functionally identical to the technique taught in the prior art. However, in cases where excess variation is caused by limit cycles driven by a nonlinearity, the tendency of standard methods to underestimate the severity of malfunctions is avoided by employing this generalized form of the performance index and its means of computation (as proposed in this invention). For example, Fig. 8A shows a dynamic simulation of a control loop exhibiting the effects of valve stiction. The index of performance as calculated by the technique proposed in the prior art is 2.1 (at the high end of the normal range). When the valve stiction element was removed from the simulation, the variations in the controlled variable are as shown in Fig. 8B. The variance was reduced by a factor of 3.6, significantly greater than the figure of 2.1 predicated by the standard performance index. The raw generalized index (eq: 1) proposed in accordance with the present invention was 3.3 in this case, providing a more realistic estimate of the excess variation caused by the malfunction.

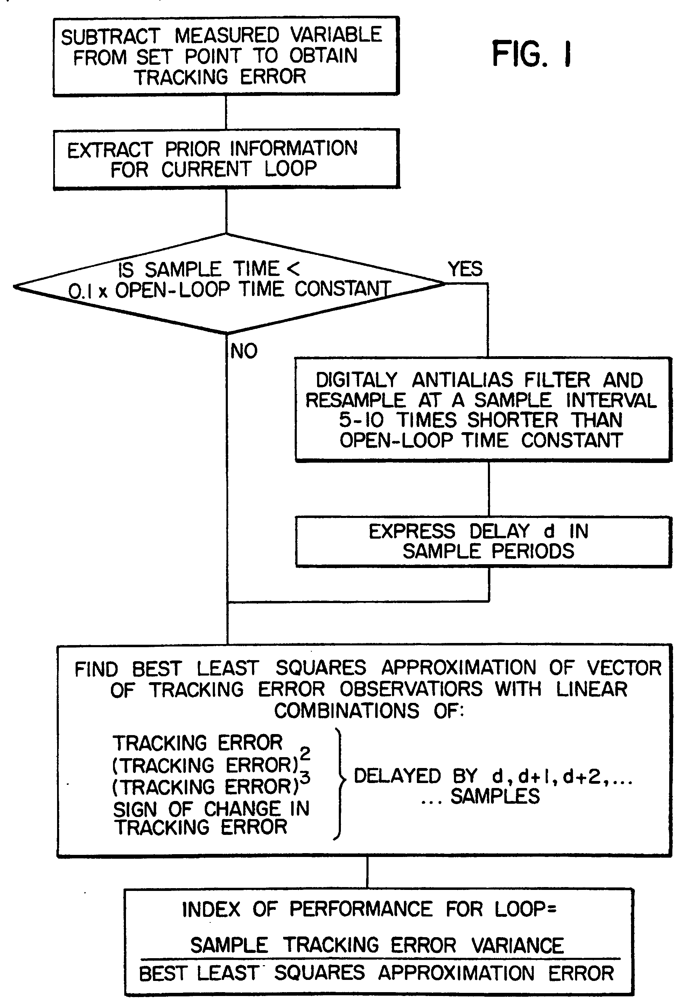

The method for determining the generalized raw index is illustrated in Fig. 1. The technique uses the equiv-

alence:

$$\text{raw index} = \frac{\text{observed tracking error variance}}{\substack{\text{variance of conditional expectation of tracking error from observations} \\ \text{at least d samples in the past}}} . \quad (2)$$

and the denominator is approximated by the process described in Fig. 1.

The method preferably also performs two other maneouvers as shown in Figure 2 to ensure an unbiased univariate performance estimate. In cases where the sample interval is shorter than 1/10th of the estimated process time-constant, the tracking error is lowpass filtered using an antialiasing filter with a cut-off frequency between 10-20 times the reciprocal of the estimated process time-constant (in radians per sample) and then resampled with a sampling interval 0.1-0.2 times the estimated dominant process time-constant. The outcome of this procedure is that the minimum variance estimate in (1) is based on a minimum variance controller with a longer assumed control interval, equal to the sample interval of the resampled data rather than the sample interval of the original data. This avoids underestimating the minimum variance when using data obtained with a sample interval much shorter than the open-loop time-constant (stemming from an ideal control action which would have to employ unrealistically large and frequent control moves), and the consequent upward bias in performance index evaluation.

Another precaution taken when evaluating the raw index, is against the bias caused by upset process conditions. A statistical test is preferably applied to the tracking error data to detect upsets; if the result is positive, either the user is warned of the potential bias or the cycle of data acquisition repeated to capture a non-upset condition. The test measures the statistical significance of the statistic D, which is sensitive to drifts in the tracking error of duration greater than one third of its length that would be associated with upset conditions:

$$D = \text{maximum of } (|m1|, |m3|)$$

where m1 and m3 are the means of the first and third thirds of the time-series. The null hypothesis is that the tracking error is a stationary random process with a power spectrum equal to M times the tracking error variance over a frequency band 0 to pi/M, where M is a preselected large number. Such a power spectrum describes a random process with significant low frequency components. The null hypothesis is invalidated with 95% confidence, and the presence of a drift indicated, if:

$$D > \text{standard dev of tracking error}$$

$$\text{x square root of } 12M/L, \quad (3)$$

where L is the number of samples

The main drawback of the prior art is erroneous performance assessment for well performing loops which are perturbed by disturbances from interacting malfunctioning control loops. The use of the modified index of performance by the invention to counter this effect and trace the root causes of malfunction is predicated on the characterization and detection of abnormal disturbances transferred through interaction. Characterization is based on a key observation, not known in the prior art, which is valid under physically reasonable assumptions: the only external abnormal disturbances to a normally functioning control loop which have the potential to artificially inflate the calculated index of performance are those with a narrow spectral bandwidth. This characterization is exploited by the invention to detect interaction which has the potential to create bias, without requiring additional process model building. In particular, tracking error variations of narrow spectral bandwidth can easily be identified by univariate Fourier transform methods, and the spectral peaks can then be compared to detect the coincidences which are indicative of interaction. By quantifying the effects only of those inter-loop disturbances which have the capability to induce errors in performance assessment, the technique provides much greater precision and simplicity than would be available with general correlation methods.

The details of this procedure are as follows: For each loop deemed potentially malfunctioning (raw index > preset threshold) the Fourier transform of the tracking error is evaluated. It is then windowed with a Daniel window whose bandwidth W periodogram ordinates is chosen so that W is the smallest integer which satisfies:

$$Wexp(W) > L \qquad (4)$$

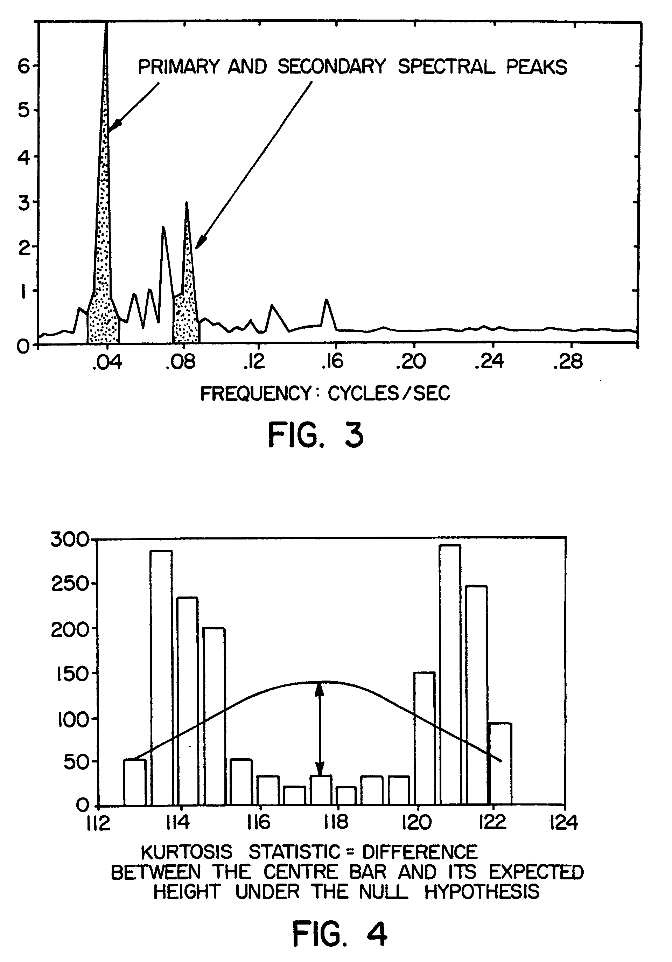

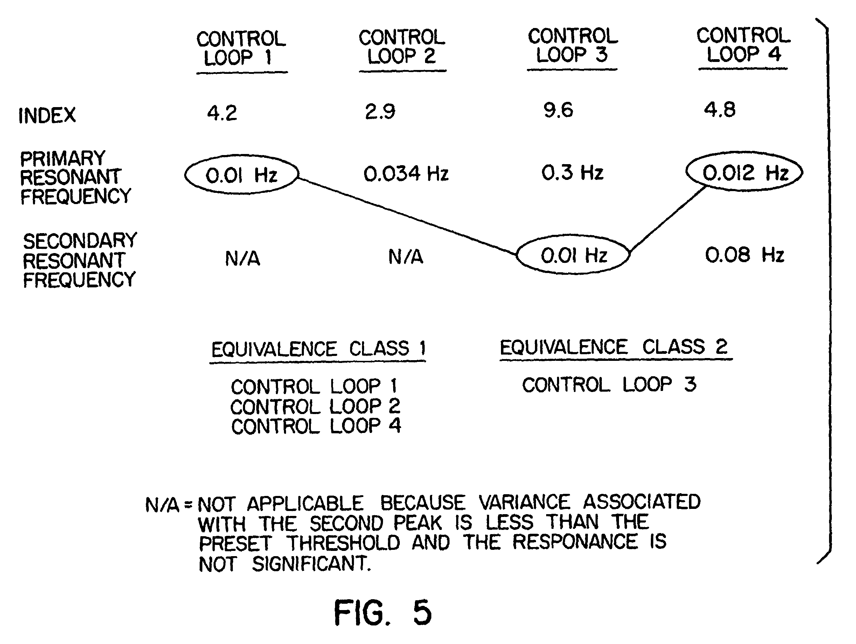

which according to the Woodroofe Van Ness formula [Priestly], for long data lengths ensures that there should be no more than 50% relative error at any point in the estimated power spectrum with high probability. In order to characterize any spectral peaks the frequency of the maximum of the estimated power spectrum f1 is estimated. The center frequency of any secondary peak f2 is then evaluated by testing for a second maxima, over frequencies excluded from an interval around the first. The variance associated with primary and secondary maxima is evaluated by computing the area under the power spectrum estimate over an interval of fixed bandwidth bw about the two estimated frequencies f1 and f2 (see Fig. 3, wherein the shaded areas represent variance associated with primary and secondary spectral peaks). If either variance exceeds preset proportions of the overall tracking error variance then a spectral resonance is considered to be present at the corresponding frequency. Equivalence classes of control loops are then formed by associating loops where either primary or secondary resonant frequency is closer than a small fixed amount to either the primary or secondary resonant frequency of another loop. An example is shown in Fig. 5, where control loops 1,2, and 4 would be associated into a single equivalence class because of a common resonance at approximately 0.01Hz.

In order to distinguish the symptoms and the causes of control loop malfunctions, a modified index of performance is then calculated for loops belonging to either one of two classes: loops belonging to an equivalence class of potentially interacting loops, or loops where a resonance is identified outside the prescribed range of wavelengths for the loop and that resonance is not caused by a limit cycle due to the presence of a severe nonlinearity in the loop. In the former case the modified index estimates the performance of the control loop if the common resonant component(s) of the variability arise(s) from disturbances contributed by an interacting malfunctioning loop and not generated internally. In this first case the modified index estimates the ratio between the variance and its estimated minimum achievable level that would have been observed prior to the onset of the external resonant disturbances. The true level of performance lies somewhere between the modified and raw indices depending on the source of the resonant component(s) in the observed variability. By contrast, in the second case the choice of representative measure of performance is more certain. If the prescribed limits have been set correctly and the judgment of the absence of a limit cycle is correct then any resonance outside the prescribed limits must be contributed by an external malfunction. Thus by excluding the effects of the resonant variation outside those limits, the modified index quantifies the performance independently of the abnormal external disturbance. In both cases the modified index is calculated in accordance with the following formula:

$$\text{Modified index} = \text{index} \times (1\text{-proportion of the}$$

$$\text{tracking error variance with resonance suspected of}$$

$$\text{being imposed externally}) \qquad (5)$$

Distinguishing excess variation caused by random limit cycles from other sources is fundamental to selecting a corrective action. Such limit cycles are caused by defects in the actuator, valve or sensor which introduce a severe nonlinearity in the control loop. Since the vast majority, if not all, actuator or valve malfunction increase variability through this mechanism, the presence of a limit cycle is strongly suggestive of such a cause. In such situations choosing an alternative control strategy using the same faulty element, or retuning the control law is unlikely to yield any global improvement of variability. Conversely, recognition of other mechanisms of excess variability, such as cyclical variations produced by underdamped closed-loop dynamics, can allow maintenance to be focused on more easily rectified factors such as tuning constants and control strategy. The phenomenon that the invention uses to detect limit cycles is their tendency to produce non-Gaussian distortion of the tracking error histogram. If the disturbances to a control loop are not caused by an abnormal external condition, their probability density function will be approximately Gaussian. This observation is a consequence of the central limit theorem of classical statistics, and has been thoroughly corroborated experimentally in many situations. If the open-loop dynamics of the actuator, sensor, and process are roughly linear for variations around the set-point(s), it follows that the tracking error will also have an approximately Gaussian probability density function. This will be true even if the choice of tuning constants or control strategy is causing excess variability by amplifying (or failing to attenuate) the disturbances. On the other hand highly non-linear open loop dynamics due, for example to valve hysteresis, that cause limit cycles in closed-loop, tend to distort the Gaussian probability density functions of the disturbances by suppressing the relative frequency around the mean value relative to the Gaussian bell, a characteristic known as kurtosis or introduce asymmetry in the relative frequency about the mean, a characteristic known as skewness.

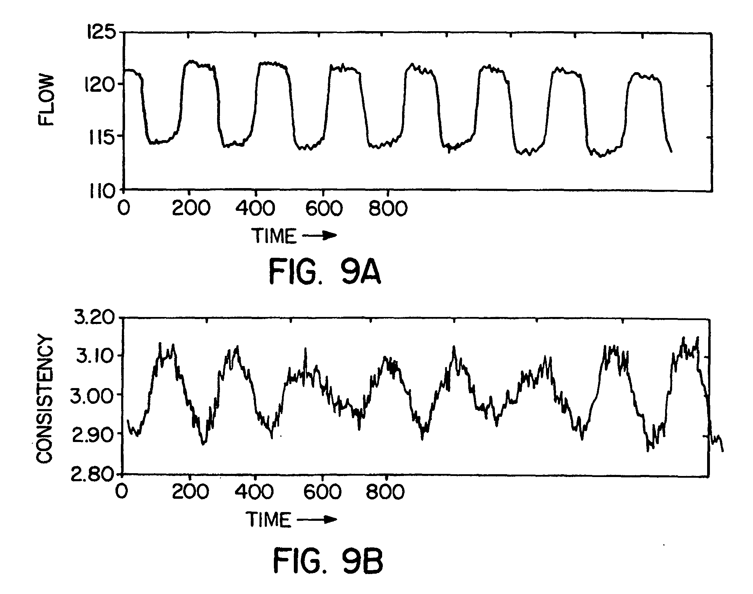

An example is shown in Fig. 4 for the flow tracking error time series shown in Fig. 9A where the characteristically flat topped limit cycles are caused by valve stiction. The generality of this observation can be deduced from research results reported by Xue and Atherton and Fuller and has been extensively verified by simulation and plant observation. This reasoning establishes the preferred technique of using a statistical measure of kurtosis (and optionally skewness) as a means of distinguishing limit cycles from other pathological variations. The statistic used to measure kurtosis is:

K = height of the tracking error histogram bar between + and - W of the mean centered on zero

- number of samples x area under normal density between + and - W of the mean $\qquad$ (6)

The statistic used to measure skewness is

$S_k$ = number of tracking error observations greater than 0

- half the total number of tracking error time-series observations.

Under the assumptions that disturbances are described by stationary random processes and that the data set is sufficiently large, the invention uses a hypothesis test to recognize statistically significant departures of K and/ or S from 0. If a null hypothesis that tracking error variations have Gaussian probability distribution is adopted, this hypothesis test detects limit cycles by measuring the confidence that the observed K and/or S is inconsistent with the null hypothesis. The method for performing this test on K proceeds as follows:

1. If the sequence of observed tracking errors is x(k) where the index k ranges from 1 (the start of the sequence) to n (the end of the sequence), new sequence y(k) is generated by the following rule:

    if x(k) is within the limits of the center bar of the histogram
    then y(k):=1 otherwise y(k):=0

    A constant equal to the sample mean of y is then subtracted from each element y(k).

2. The autocorrelation function for the sequence y(k) is computed up to a fixed lag N. That sequence is denoted by R(j) where j ranges from -N to +N.
    The preferred method of calculating the autocorrelation sequence is to compute an autoregressive model for the time-series y using standard least-squares methods, and estimate R from the autoregressive parameters.

3. The sum of the sequence y(k) prior to removing the sample mean, defined to be S, is the height of the center bar of the histogram. Under the null hypothesis the expected value of S is equal to the area under the Gaussian bell in the range of the center histogram bar multiplied by the number of samples. The variance of S is given by the formula:

$$Var(S) = \sum_{k=1}^{n-1} 2(n-k)R(k) + nR(0) \qquad (7)$$

    where R(.) is the estimated autocorrelation sequence,
    n is the number of samples,
    S = the sum of the sequence y(k) prior to removal of the sample mean, which is the height of the center bar of the histogram, and the expected value of S is equal to the area under the Gaussian curve in the range of the center histogram bar multiplied by the number of samples, i.e.

$$nerf(\frac{x}{1.414})$$

where $\chi = \dfrac{W}{\text{sample standard deviation of } \chi(k)}$.

4. If there are a sufficient number of data points the probability density function for the random variable S is Gaussian. Under this assumption the confidence in the null hypothesis can be expressed:

$$\text{confidence} = nerf(\frac{x}{1.414}) \tag{8}$$

where $\chi=$ absolute value of the difference between the expected value of S and its computed value divided by the estimated standard deviation of S as calculated from (7)

Negative or positive results for the limit cycle test can be decided by selecting appropriate confidence bands. For example if confidence is less than 10% then a limit cycle is deemed to be present, if confidence is greater than 70% then a limit cycle is not deemed present, otherwise the result is equivocal.

The same test can be used for the skewness statistic $S_k$ by replacing "center bar of the histogram" by "greater than zero" in steps 1 and 3 and noting that the expected value of S is $\frac{n}{2}$.

The key feature of this statistical test is that it accounts for the correlation between successively observed tracking error measurements, a phenomenon which invalidates the basic assumption of classical non-normality tests. A second advantage is that the test quantifies the main characteristic of the histogram distortion produced by common nonlinearities caused by friction in actuator/valves, so enhancing the sensitivity and accuracy of the test. The main advantage of using this process for on-line control malfunction diagnosis is that it uses only normal closed-loop operating data, no probing of the process is required.

Examples:

The following two examples demonstrate two cases of interaction and its effect on the ability of the invention to determine the root cause of a malfunction.

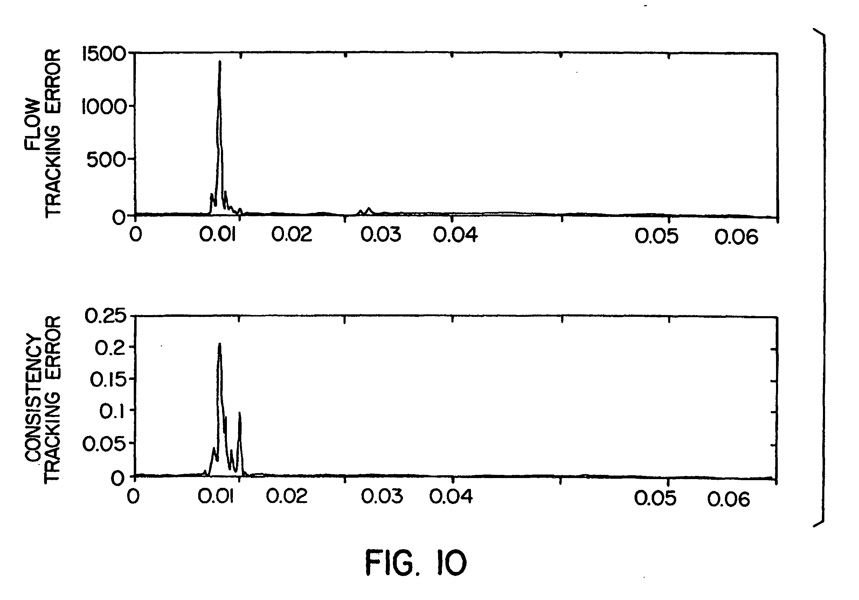

Case 1: Fig. 9 shows two time series depicting two controlled variables on a paper machine: the flow rate and consistency (dry solids mass per unit liquid mass) of the flow of broke pulp to the blending tank ahead of the machine. The flow control loop and the consistency control loop comprised the set of loops whose performance indices were greater than the preset threshold (dubbed "potentially malfunctioning"), among the larger preselected list of loops from which data was analyzed. The performance indices as calculated by the method shown in Fig. 1 were 9.65 and 2.51. The power spectra estimates obtained from the smoothed Fourier transform (with Daniel window size given by eq: 4) are shown in Fig. 10. Both the flow tracking error and the consistency tracking error exhibit a primary cyclical variation at a frequency of 0.0081 Hz. The proportion of the variance within a bandwidth of +/- 0.00125 Hz (+/- 1 % of the entire range) of the primary peak is 80% for the flow tracking error and 57% for the consistency tracking error; both these values are above the threshold level for designation of a primary resonance. No secondary peak has sufficient variance within a +/-0.00125 Hz bandwidth to be designated a secondary resonance. In accordance with the preferred embodiments, the two control loops are assigned to the same single equivalence class of potentially interacting loops.

Application of eq: 5 yields modified indices of performance 1.92 and 1.09 respectively. In neither case is the frequency of the resonance outside the pre-computed limits, and so in either case the "real" index could lie anywhere between the modified and unmodified index. Since both of the modified indices are in the "normal" range of 1-2, the results do not definitely isolate either loop as a source of malfunction independently of the other, and a manual bump test is required to make the distinction.

The hypothesis test on the tracking error histogram revealed a 3% confidence in the null hypothesis for the flow loop and a 45% confidence for the consistency loop. Consequently the conclusion is made that if the flow loop is the source of the malfunction, the cause is a nonlinearity in the loop such as a defective valve or actuator, and if the consistency loop is the source of the malfunction then the cause is a linear phenomenon such as poor choice of tuning constants. Subsequent tests identified the first loop as the cause of the problem and confirmed the diagnostic produced by the method. Repair of the valve position and realignment of the valve resolved the malfunction.

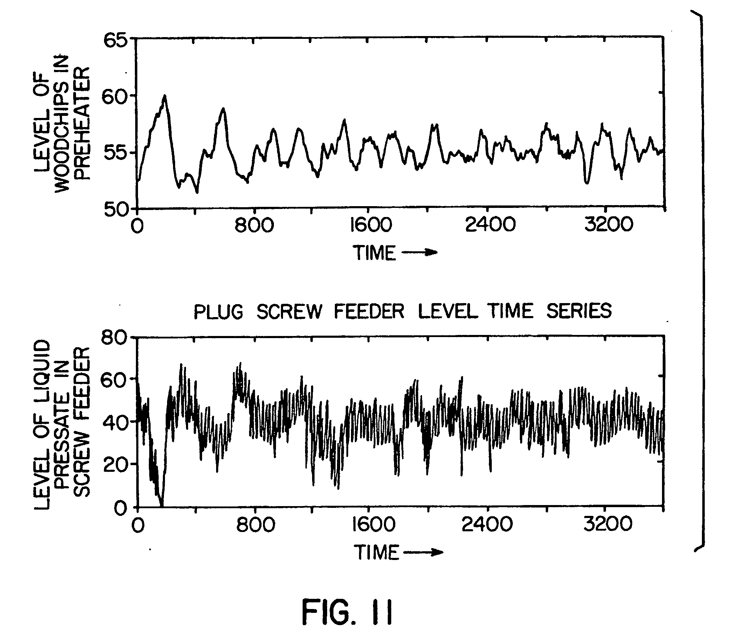

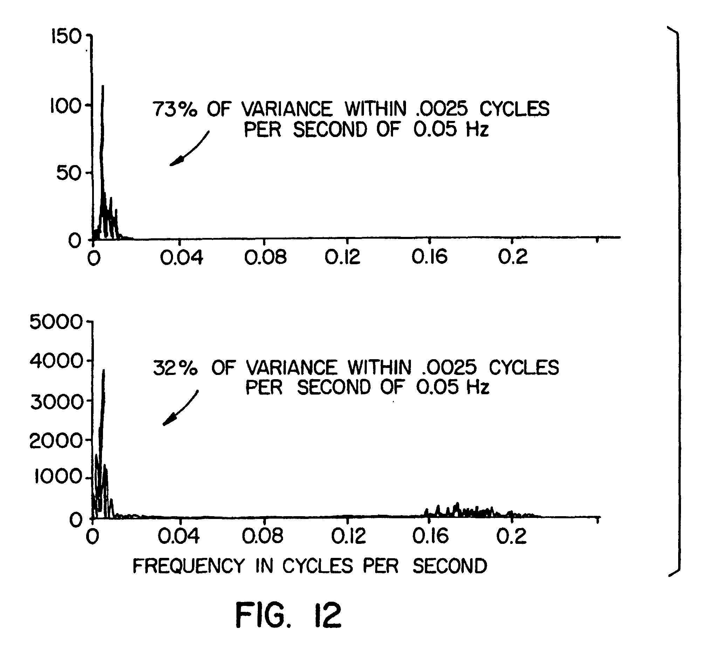

Case 2: Fig. 11 shows two time series depicting two controlled variables on in a thermomechanical pulp mill: the level of woodchips in a preheater and the level of liquid pressate in the plug screw feeder that receives chips from the preheater. As in case 1 the preheater level control loop and the plug screw level control loop comprised the set of "potentially malfunctioning" loops among the list of loops from which data was analyzed. In the former case the performance index was 348.7 and in the latter it was 4.27. The windowed power spectrum estimates are shown in Fig. 12. As in case 1 primary resonances occur in both loops, both at a frequency 0.005 Hz, accounting for 73% and 32% of the variance respectively. For the preheater level, no secondary peak has sufficient variance within a +/-0.00125 Hz bandwidth to be designated a secondary resonance. However for the plug screw level a secondary resonance at 0.183 Hz was detected with an associated relative variance of 3% with a bandwidth +/- 0.000125 Hz. The coincidence of the two primary resonances causes the method to associate both loops with the same single equivalence class of potentially interacting loops, as in case 1. The modified indices of performance are 93.91 and 2.93 respectively, and in neither case is the resonance outside the preset limits. However in contrast to case 1, both modified indices are above the level of normally functioning loops, and it can thus be concluded that both loops are malfunctioning independently of the evident interaction between them. The histogram test reveals confidences of 32% and 65% in the null hypothesis, and so both malfunctions are likely caused by linear defects.

Prior estimates can be obtained for the closed-loop resonant frequencies of two commonly occurring classes of process dynamics:

a) Self regulating processes with linear dynamics which are approximately described by a first order stable transfer function and a delay;
b) Non-self regulating processes with negligible delay.

The two estimates which follow are independent of the controller tuning constants: For a process whose dynamics are described by a), any closed-loop resonant frequency is bounded below by the smallest frequency w (in radians per sample) which satisfies

$$\frac{Sin\ w}{1+\dfrac{1}{\alpha}-cosw} > \tan\left(\frac{\pi}{3}-(d+1)w\right) \qquad\qquad (9)$$

where $\alpha$ is the open loop time-constant and d is the open loop dead-time.

For a process whose dynamics are described by b), any closed loop resonant frequency is bounded above by: 30/(time for process variable to change 1% for a 1% change in the manipulated variable). The quantity on the denominator above is considered to be a generalization of the time-constant for non-self regulating processes when setting up the prior information files for those loops. Both these bounds are derived from classical Nyquist frequency response methods and some assumptions about the actuator in the latter case. Other, similar bounds can be derived in the same manner for different assumptions.

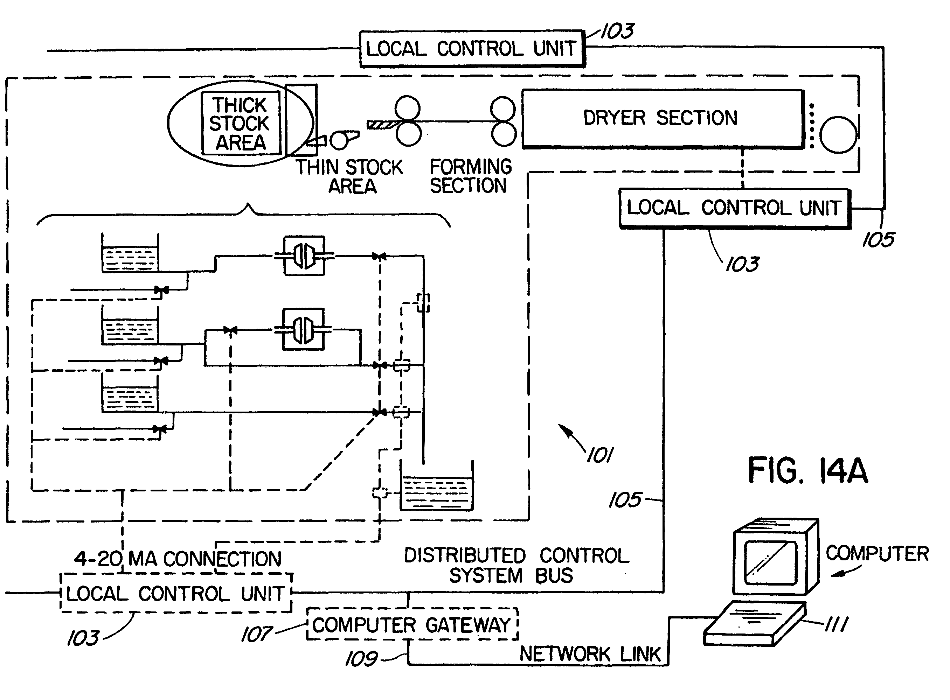

Figure 14A illustrates a paper making machine 101, which has plural local control units 103 controlling different parts of the machine. The control units are comprised of various closed loop control loops of well known structure. The local control units are connected to a distributed control system bus 105, which bus is connected via a computer gateway 107 and a network link 109 to a computer 111, having a display.

In operation, a stream of data comprised of a measurement by the local control units of a variable being controlled by each control loop, and a target or set point for each control loop, is passed via the local control units 103 via the bus 105, gateway 107 and network link 109 to the computer 111, where the remainder of the process already described is further carried out.

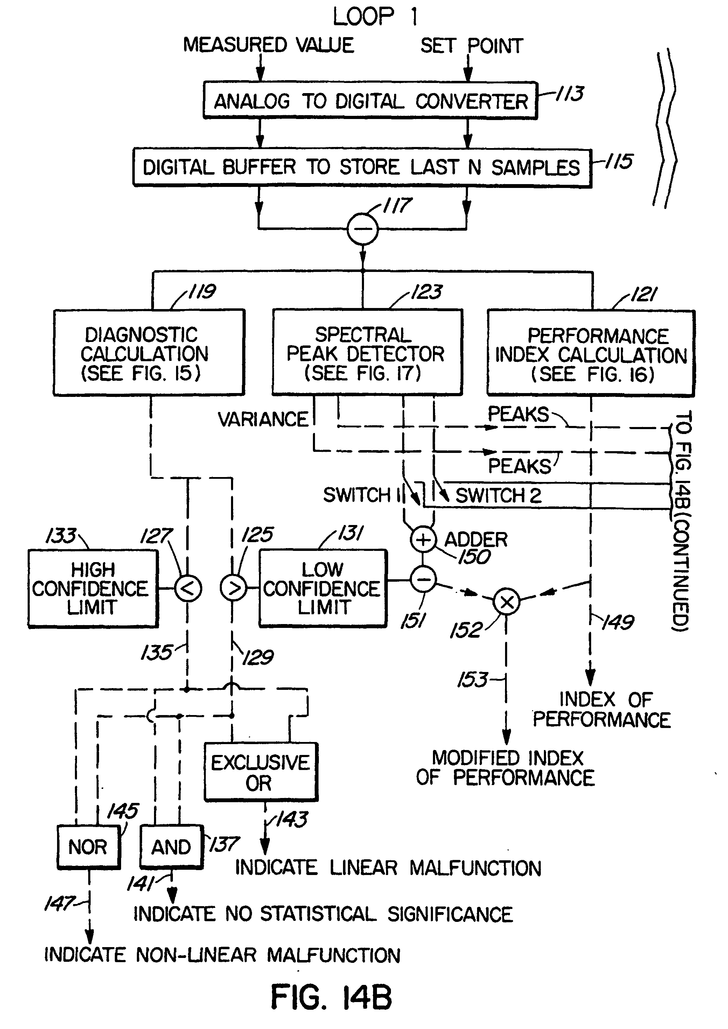

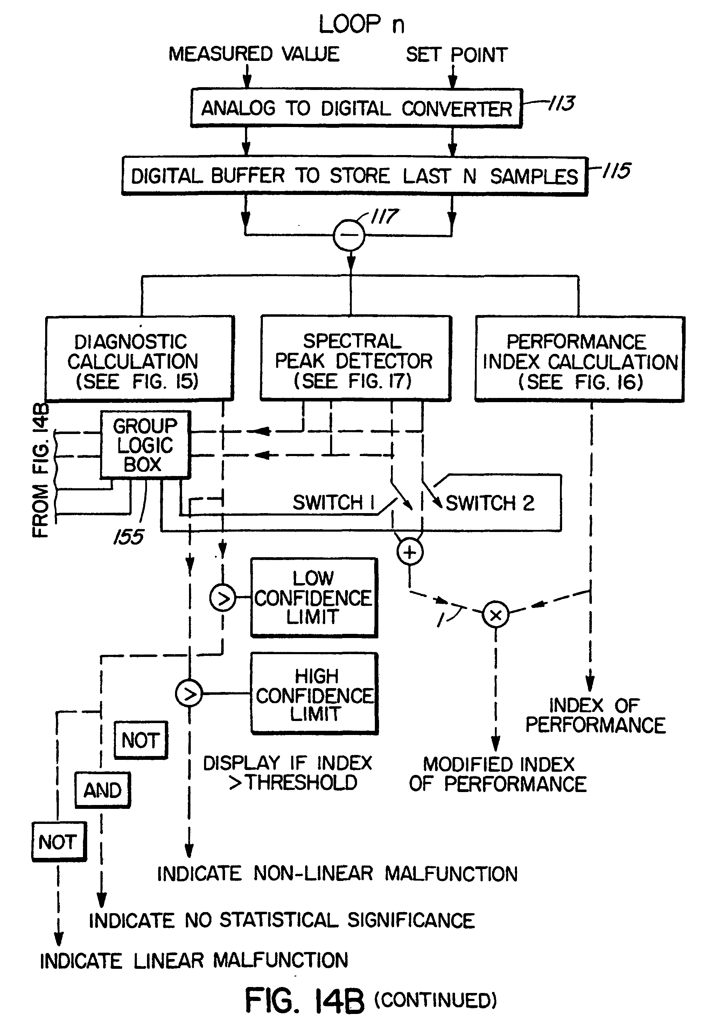

It should be understood that the process can be carried out using the structure and elements to be described below with reference to Figures 14B, 15, 16 and 17. Alternatively, the computer 111 can simulate the structures to be described below.

Figure 14B illustrates a basic block diagram of a structure which can implement the inventive process. The aforenoted variables being controlled and the target or set points are sampled by the local control units, and are converted by analog to digital converters 113 for each of the n control loops to digital form, and the last N samples of each are stored in a buffers 115. The measured value of each controlled variable is then subtracted from the associated set point in corresponding subtractors 117, to obtain a sequence of digital data value signals representing the tracking error for each loop.

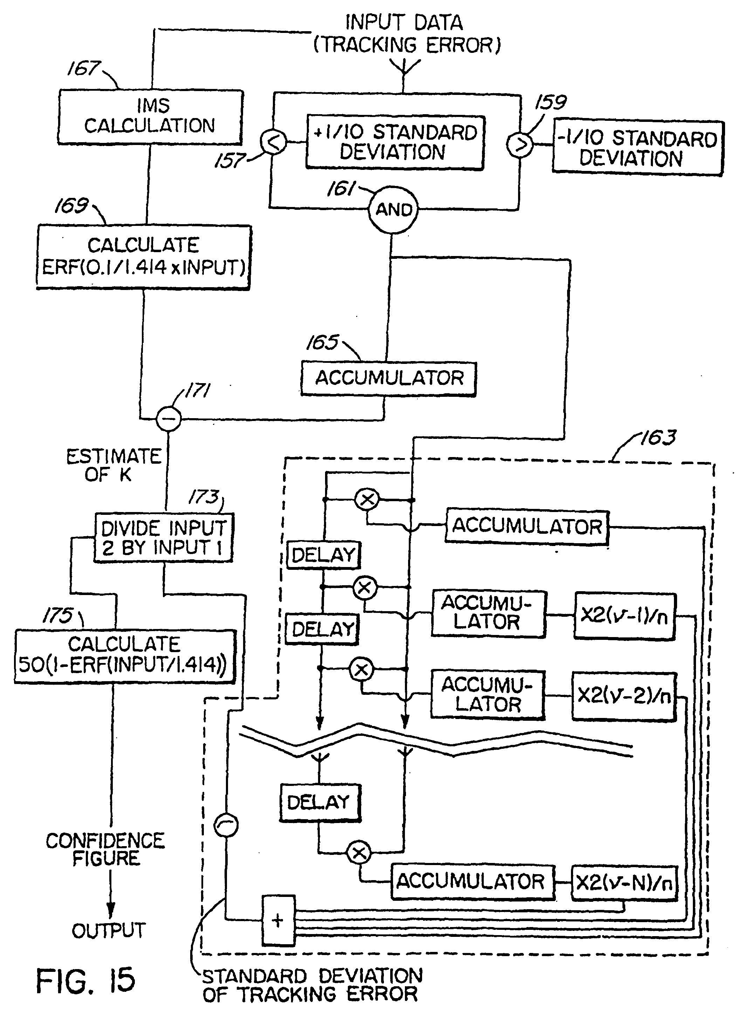

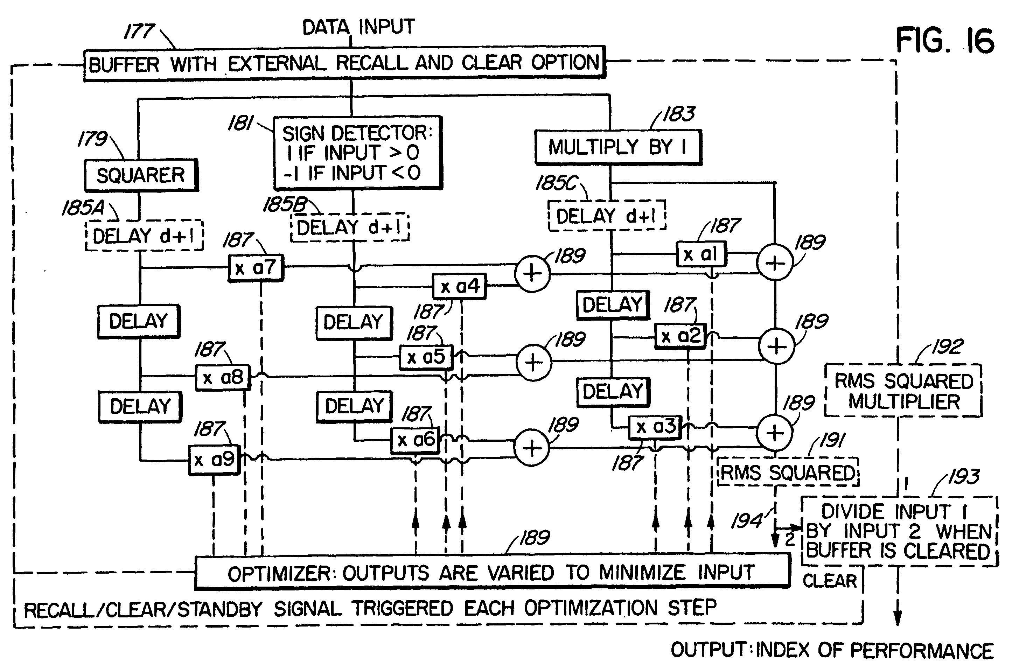

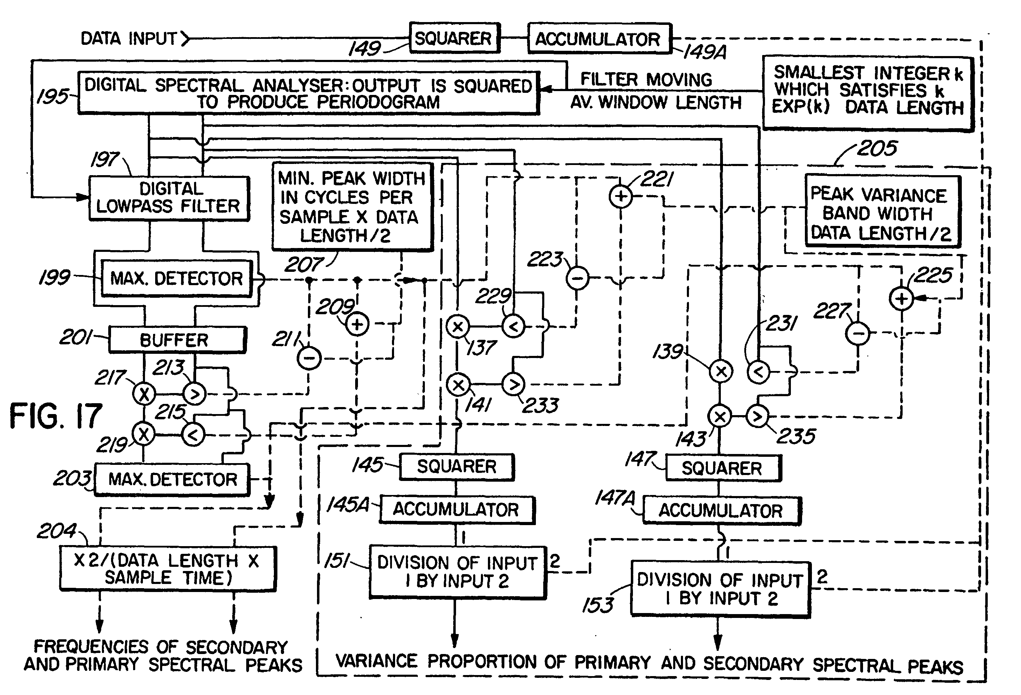

The tracking error signals for each loop are applied to a diagnostic evaluator 119 which is described in more detail with reference to Figure 15, to a performance index determinator 121 which is described in more detail with respect to Figure 16, and to a spectral peak detector which is described in more detail with respect to Figure 17. The outputs of these subsystems are signals representing single values rather than data sequences.

An output signal of the diagnostic block 119 is a figure of confidence in the null hypothesis that the probability density function of the input sequence is normally distributed, i.e. that it has a purely Gaussian distribution. To interpret this figure of confidence, this signal is compared with two limits (confidence low limit, and confidence high limit) in respective comparators 125 and 127, the limits being provided by constant signal generators 131 and 133. The threshold or limit signals applied by generators 131 and 133 are compared with the figure of confidence signal in comparators 125 and 127 respectively, and an output signals are generated to signal paths 129 and 135 respectively indicate that the indexes exceed the limit signals.

The signals indicating exceeding of the confidence high and low limits are simultaneously applied to NOR gate 145, AND gate 137, and exclusive OR gate 134. The output signal of NOR gate 145 is applied to a signal path 147, which when high indicates a non-linear malfunction in the control loop. The output signal of the AND gate 137 is applied to signal path 141, which when high indicates a linear malfunction of the control loop. The output signal of the exclusive OR gate 134 is applied to signal path 143, which when high indicates that there is no statistical significance of the null hypothesis form the diagnostic evaluator.

The output signal of the performance index determinator 121 on line 149 is the nonlinear performance index for the control loop in question.

The spectral peak detector 123 provides four output signals: the frequencies of any secondary and primary spectral peaks, and the proportion of the total variance (within a preset bandwidth) accounted for by those primary and secondary peaks.

The pair of the output signals of the spectral peak detector representing the proportion of the total variance accounted for by those primary and secondary peaks are passed through respective switches X and Y (for each loop) and are applied to adder 150. The output is subtracted from "1" in subtractor 151, and the result is multiplied in multiplier 152 from the performance index output from performance index determinator 121 on line 149, to provide a modified index of performance on line 153.

These output signals for all of the n spectral peak detectors are assigned into equivalence classes, as follows.

Group logic 155 receives the frequencies of the spectral peak output signals from the each of the spectral peak detectors 123, and assigns loops into equivalence classes, according to the following conditions:

(a) A primary spectral peak (accounting for more than a predetermined proportion of the variance) for one loop coincides with either a primary or secondary spectral peak in another loop (that accounts for more than a predetermined proportion of the variance);

(b) A secondary spectral peak (accounting for more than a predetermined proportion of the variance) for one loop coincides with either a primary or secondary spectral peak in another loop (that accounts for more than a predetermined proportion of the variance);

(c) If criteria (a) is satisfied for a given loop, then switch X is closed for that loop. If criteria (b) is satisfied for a given loop, then switch Y is closed for that loop.

This action has the effect of setting the modified performance index on line 153 equal to the performance index scaled down by the variance proportion of any significant spectral peak(s) which are in common with other loops and cause the loop in question to be assigned to an equivalence class.

The details of an embodiment of the diagnostic evaluator 119 is illustrated in Figure 15. The tracking error signal from subtractor 117 (Figure 14B) is applied to a pair of comparators 157 and 159 (Figure 15). Also applied to comparator 157 is a constant signal representing +0.1 standard deviation of zero, and also applied to comparator 159 is a signal representing -0.1 of a standard deviation of zero. Comparator 157 outputs a signal which is 1 when the tracking error is smaller than +0.1 standard deviations of zero and zero otherwise and comparator 159 outputs a signal which is 1 when the tracking error is larger than -0.1 standard deviation of zero. The outputs of the comparators 157 and 159 which are sequences comprising zeroes and ones are applied to AND gate 161, which has an output signal that is one when the tracking error is within the +0.1 and -0.1 standard deviation bounds of zero and is zero otherwise, in the form of a sequence of ones and zeros, with the value of one when the tracking error is within the aforenoted bounds.

This signal is applied to processor 163 which determines the standard deviation of the statistic k, in accordance with equation (7) described earlier.

The sequence of ones and zeros is also summed in accumulator 165, resulting in an output signal therefrom that represents a single number which is equal to the number of points in the original input sequence having absolute value within the +/- 0.1 standard deviations bounds of zero.

The tracking error is also applied to a root means square calculator 167, where standard deviation is calculated, the resulting signal being processed in processor 169 by $e^{(0.1/(1.414 \times input))}$ (where "input" is the output signal of calculator 167) and then multipled by the total number of samples, to provide an estimate of the expected value of the output of accumulator 165 under the null hypothesis that the probability density function of the tracking error is normal.

The estimate of K signal is obtained as the output of subtractor 171, which is the difference between the signal which is the output of the calculation block 169 and the signal which is output from accumulator 165. This signal is applied to divider 173. The estimated standard deviation of the statistic k obtained in processor 163 is also applied to divider 173, where it is divided into the signal output from subtractor 171. The result is processed through processor 175 where it is transformed by $50(1-e^{(input/1.414)})$, where "input" is the output signal from divider 173, the result being the estimate of K relative to its estimated standard deviation.

The ratio K to its estimated standard deviation as processed in processor 175 is a signal representing the confidence figure described earlier with reference to Figure 14B.

The processor 163 can be realized by multiplying the output signal from AND gate 161 with itself and progressively delayed versions thereof, and accumulating the result in respective accumulators. The output of the accumulator of the nondelayed multiplied output signal, and the outputs of the other accumulators multiplied by $2(n-x)/n$ (where x represents the number of delay elements in series and n represents the number of points in the original input sequence) are added together and the result forms the standard deviation of the tracking error signal.

Figure 16 illustrates an embodiment of a performance index determinator 121 (Figure 14B). The input signal from subtractor 117 is stored in a buffer 177.

When triggered, the buffer transmits the stored signal to a squarer 179, to a sign detector 181, and to a multiplier by 1, 183.

The outputs of the squarer 179, sign detector 181 and multiplier 183 are applied to tapped delay lines 185A, 185B and 185C, wherein tapping weights 187 are variable under control of an optimizer processor 189. The optimizer processor 189 varies the tapping weights to minimize its input signal.

The output signals from delay line, weighted by the tapping weights, are summed in adders 189, and the resulting sums are added to the undelayed input signal from the output of multiplier by 1, 183.

It should be noted that the first delay element of the tapped delay line delays the input signals by $d+1$ samples, where d is the dead-time of the control loop under consideration.

The variance of the resulting sequence of sums is then computed, by dividing the rms squared (in multiplier 192) of the signal stored in the buffer 177 by the output signal from rms calculator 191, in divider 193. The quotient, representing the index of performance, is inversely related to the accuracy of prediction of current observations of the input sequence of 183 or 117 by linear combinations as represented by tapping weights of the algebraic functions of past observations.

The optimizer 189 then repeats the cycle for new values of the tapping weights, retriggering the buffer 177 to recall the input sequence, recalculating the approximation error for modified tapping weights, until the variance of the sum sequence 194 is minimized. Upon completion of the optimization the variance of the input signal is divided by the minimum variance of the sum sequence to yield the performance index, which is the final output of the performance index determinator block 121.

An embodiment of the spectral peak detector 123 (in Figure 14B) is illustrated in Figure 17. The input signal from the subtractor 117 is applied to a digital spectral analyzer 195, whose output signals are a sequence of squared absolute values of the Fourier transform of. the input signal and the sequence of corresponding frequencies. The first output signal is passed through a symmetrical non-causal moving average digital filter 197, the width of the moving average of which is set by a smallest integer k which satisfies $ke^{(k)}$<data length.

The output signal of the filter 197 and the second (frequency) output of the spectral analyzer 195 are applied to a maximum detector 199, which computes the frequency of the maximum point of the filtered spectrum. This peak is then identified with the primary spectral peak.

The filtered spectrum from filter 197 and the sequence of frequencies are then stored in another buffer 201. All spectral values of the signal stored in this buffer that are within a certain bandwidth of the frequency of the primary spectral peak are then set to zero by a sequence of operations to be described below.

The frequency at the maximum of this modified spectrum is then computed by a second maximum detector, and this frequency is identified with the secondary spectral maximum which is output from detector 203. Frequencies are then multiplied by (2/(data length x sample time)), to obtain the frequencies of the secondary and primary spectral peaks, which are one pair of the output signals of spectral peak detector 123.

The elements in the dashed line block 205 calculate the proportion of the variance within a preset bandwidth of the calculated frequencies of the primary and secondary spectral peaks, the other pair of output signals of the spectral peak detector 123.

Setting the spectral values within a certain bandwidth of the frequency of the primary spectra to zero is obtained by providing a signal from a processing circuit 207 which represents the minimum peak width in cycles per sample x (data length)/2, in periodogram ordinates. This signal is added to the output signal of the maximum detector 199 in adder 209 and is subtracted from the same signal in subtractor 211. The result is compared with the second frequency sequence output signal of the spectral analyzer 195 in comparators 213 and 215.

If any element of the output of the spectral analyzer is less than the corresponding output of subtractor 211, the corresponding output of the comparator 213 is one, otherwise it is zero. If any element of the output of the spectral analyzer 195 is greater than the corresponding output of the adder 209, the output of comparator 215 is one, otherwise it is zero. The outputs of comparators 213 and 215 then multiply the first output of buffer 201 in multipliers 217 and 219. The result, and the output of the buffer 201, are applied to the maximum detector 203.

The proportion of the variance within a preset bandwidth of the calculated frequencies of the primary and secondary spectral peaks are determined by applying the output of the maximum detector 199 to adder 221 and to subtractor 223 to which a signal is applied representing the (peak variance bandwidth)x(data length)/2. The output signal of the maximum detector 203 is applied to subtractor 223 and to subtractor 227 to which the signal is applied representing the (peak variance bandwidth)x(data length)/2. The output signals of subtractors 223 and 227 are applied to respective comparators 229 and 231, to which the second (frequency) output of the digital spectral analyzer 195 is applied.

In the event that this signal exceeds the output of subtractor 223 or 227 the output of the respective comparator 229 or 231 is one, otherwise it is zero.

Similarly, the outputs of adders 221 and 225 are applied to inputs of comparators 233 and 235 to which the same output of the digital spectral analyzer 195 is applied. In the event that this signal is less than the output of adder 221 or 225, the output of the respective comparator 233 or 235 is one, otherwise it is zero. The outputs of comparators 229, 233, 231 and 235 are multiplied in respective multipliers 137, 141, 139 and 143 with the first (spectrum) output signal of the spectral analyzer 195.

The resulting outputs of multipliers 141 and 143 are applied to respective multipliers 145 and 147 where they are squared and the sequences summed. The resulting signals are divided in dividers 151 and 153 by the sum of the squares of the input signal to the spectral analyzer calculated by processor 149.

The output signals of the dividers 151 and 153 represent the variance proportion of the primary and secondary spectral peaks, and the output of processor 204 provides the frequencies of the primary and secondary spectral peaks, which are the four output signals, noted in the earlier description of Figure 14B, from spectral peak detector 123.

A person understanding this invention may now conceive of alternative structures and embodiments or variations of the above.

**Claims**

1.    A method of diagnostic differentiation between two or more potential sources of a malfunction relating to a closed loop control loop of a process control system which includes at least one closed loop control loop comprising measuring a histogram of tracking error of said control loop, determining distortion of said tracking error relative to a Gaussian distribution, and indicating a malfunction in the process in the event a deviation from said Gaussian distribution of said tracking error exceeds predetermined limits, wherein said distortion (K) is measured by subtracting from a height of a tracking error histogram bar of said histogram centered on zero, a number of samples multiplied by an area between a pair of limits defining a normal density about a mean of said histogram, and then indicating a malfunction in the process in the event a value of K is different from 0 by a predetermined amount.

2.    A method as defined in claim 1 in which the malfunctioning indicating step is carried out by:

   (a) if a sequence of observed tracking errors is x(k), where the index k ranges from 1 (the start of the sequence) to n (the end of the sequence), generate a new sequence y(k) by the following rule:

      if x(k) is within the center bar of the histogram, then y(k): = 1, otherwise y(k):=0, then subtract the sample mean of y from each element y(k),

   (b) compute an autocorrelation function for the sequence y(k) up to a fixed lag N, wherein an autocorrelation function sequence is R(j) where j ranges from -N to +N,
   (c) determine a variance using the transform

$$Var(S) = \sum_{k=1}^{n-1} 2(n-k)R(k) + nR(0)$$

      where R(.) is the estimated autocorrelation sequence,
      n is the number of samples,
      S = the sum of the sequence y(k) prior to removal of the sample mean in (a), which is the height of the center bar of the histogram, and the expected value of S is equal to the area under the Gaussian curve in the range of the center histogram bar multiplied by the number of samples,
   (d) determine a confidence value C,
      where C = $nerf(\frac{x}{1.414})$,

$\chi$ = absolute value of the difference between the expected value of S and its computed value divided by the estimated standard deviation of S, and

(e) set confidence bands and determine whether C is contained within the bands.

3. A method of diagnostic differentiation between two or more potential sources of unsatisfactory control loop performance of an industrial machine which includes a plurality of closed loop control loop comprising:

(a) collecting operating data comprising time series of controlled variable measurements and control loop set points simultaneously from predetermined control loops, for a period of at least approximately 100 times a longest time constant of said predetermined control loops,
(b) subtracting measured variable data from set point data to obtain tracking errors,
(c) determining an amount by which observed variance of a tracking error exceeds a minimum value, after non-linear elements have been removed from a loop, exploiting prior estimates of process time constant and dead-time to provide a raw index,
(d) testing for any interactions between control loops which may be inflating in an abnormal manner an estimate of said raw index,
(e) determining a modified raw index for a particular loop in the event said inflated estimates are detected, and
(f) distinguishing between control loops that are malfunctioning, those that are not malfunctioning, and those that are possibly malfunctioning and are perturbed by interacting malfunctioning control loops, based on said raw index and said modified raw index.

4. A method as defined in claim 1 or 2 further comprising:

(i) computing said histogram of the tracking error for each loop of said system;
(ii) quantifying kurtosis of each histogram by determining height of a center bar of said histogram relative to an expected height wherein the expected height is determined by an assumption that tracking error is normally distributed with a sample mean and sample variance,
(iii) calculating a statistical significance of said kurtosis in a downward direction, taking into account any inter-sample correlation of tracking error time-series, and
(iv) displaying said statistical significance as a diagnostic measure indication.

5. A method as defined in claim 3, in which said raw index (IN) is determined by observing tracking error variation (O) in said loop, determining a variance of conditional expectation (V) from measurements and samples in the past, and processing O/V to obtain IN.

6. A method as defined in claim 5, wherein V is determined by:

(a) subtracting a measured variable from a set point to obtain a tracking error,
(b) extracting prior measured variable data for said loop,
(c) in the event a sample time T of said variable is at least approximately 0.1 times the dominant open loop time constant of said loop, finding best least squares approximation of a vector of tracking error observations with linear combinations of tracking errors and successive tracking errors delayed by successive sample period delays, and
(d) in the event a sample time of said variable is smaller than approximately 0.1 times said dominant loop time constant, resample said variable at a sample interval approximately 5 - 10 times shorter than said dominant open loop time constant, and then find the best least squares approximation as in step (c).

7. A method as defined in claim 6 in which the step of calculating said raw performance index is comprised of determining an amount by which observed variance of a tracking error exceeds a minimum value, after non-linear elements have been removed from a loop, from prior estimates of process delayed time constant.

8. A method as defined in claim 6 in which step (d) is comprised of digital antialias filtering said variable and resampling said variable at a longer sample interval I which is approximately 5 - 10 times shorter than said open loop time constant, and expressing said longer sample intervals as said sample intervals.

9. A method as defined in claim 8 in which a cut off frequency of the antialiasing filter is between 10-20 times the reciprocal of the open loop time constant in radians per sample, and in which the resampling interval is approximately 0.1 - 0.2 times an estimated process time constant.

10. A method as defined in claim 6 including the step of determining the existence of drift in tracking error using a statistic D wherein D = maximum of ($|m1|$, $|m3|$) wherein m1 and m3 are means of the first third *and* third third of a time series of said tracking error, and providing a warning signal if D > standard deviation of the tracking error x $(12M/L)^{1/2}$, where m is a predetermined large number and L is the number of samples in the time series.

11. A method as defined in claim 3 **characterised by**

    (a) in relation to a control loop of a group of loops control indicated as potentially malfunctioning, computing a fast Fourier transform of a tracking error, and filtering products of said transform to remove spurious peaks,
    (b) identifying primary and secondary spectral peaks contributing more than a threshold variance in a predetermined bandwidth for said control loop,
    (c) selecting another control loop in said group of control loops and repeating steps (a) and - (b) until a last control loop in said group has been processed,
    (d) dividing potentially malfunctioning loops with approximately coincident spectral peaks into possibly interacting classes, and
    (e) determining a modified performance index for all control loops belonging to a class.

12. A method as defined in claim 11 including determining a drift of said operating data, and indicating from a value or a trend of said drift whether an upset condition exists, and in the event an upset condition exists, providing a warning indication.

13. A method as defined in claim 12 including carrying out the step of determining the presence of said drift by determining a statistic D for the drift tracking error of said loop, wherein D = maximum of ($|m1|$, $|m3|$), wherein m1 and m3 are means of a first third and third third of a time series of tracking error, and indicating an upset condition if D > standard deviation of the tracking error x $(12M/L)^{1/2}$ where M is a predetermined large number and L is the number of samples in the tracking error time eries.

14. A method as defined in claim 3 **characterised by**

    (a) tracking error variations of narrow spectral bandwidth in each of said predetermined control loops of said process,
    (b) comparing spectral peaks of said error variations to detect coincidences of peaks which are indicative of interaction between said predetermined control loops, and
    (c) quantifying effects of said error variations which have said coincidences of peaks, and as a result determining malfunctioning of a control loop.

15. A method as defined in claim 14 performed on each control loop deemed to be malfunctioning, in which said error variation tracking step is comprised of evaluating a Fourier transform of said tracking error variations, windowing products of the Fourier transformation, choosing a Daniel window having bandwidth W periodogram ordinates such that W is a smallest integer which satisfies $Wexp^W > L$, and in which the spectral peak comparing step is comprised of estimating the frequency f1 of a first maximum of the estimated power spectrum, evaluating a center frequency f2 of any center peak by testing for a second maximum over frequencies excluded from an interval around the first maximum, evaluating a variance associated with said primary and secondary maxima by computing an area under the power spectrum estimate over an interval of fixed bandwidth about said frequencies f1 and f2, and indicating the presence of a spectral resonance at a corresponding frequency f1 or f2 in the event either variance exceeds predetermined proportions of overall tracking error variance.

16. A method as defined in claim 15 including the step of forming classes of control loops by associating control loops in a class, wherein said frequencies f1 and f2 of a control loop are adjacent to either said f1 or f2 of another control loop by a small predetermined amount.

17. A method as defined in claim 7 including determining a category of malfunction of a process carried out by said industrial machine comprising:

    (a) tracking error variations of narrow spectral bandwidth in each of plural control loops of said process,

(b) comparing spectral peaks of said error variations to detect coincidences of peaks which are indicative of interaction between said plural control loops, and

(c) quantifying effects of said error variations which have said coincidences of peaks, and as a result determining malfunctioning of a control loop.

18. A method as defined in claim 17 performed on each control loop deemed to be malfunctioning,

in which said error variation tracking step is comprised of evaluating a Fourier transform of said tracking error variations, windowing products of the Fourier transformation, choosing a Daniel window having bandwidth W periodogram ordinates such that W is a smallest integer which satisfies $wexp^W > L$,

and in which the spectral peak comparing step is comprised of estimating the frequency f1 of a first maximum of the estimated power spectrum, evaluating a center frequency f2 of any center peak by testing for a second maximum over frequencies excluded from an interval around the first maximum, evaluating a variance associated with said primary and secondary maxima by computing an area under the power spectrum estimate over an interval of fixed bandwidth about said frequencies f1 and f2, and indicating the presence of a spectral resonance at a corresponding frequency f1 or f2 in the event either variance exceeds predetermined proportions of overall tracking error variance.

19. A method as defined in claim 18 including the step of forming classes of control loops by associating control loops in a class, wherein said frequencies f1 and f2 of a control loop are adjacent to either said f1 or f2 of another control loop by a small predetermined amount.

20. A method as defined in claim 10 including the steps of determining a modified index of performance as a determination of malfunction for control loops belonging to either a class of potentially interacting control loops or a class of control loops in which a resonance is identified to be outside a predetermined range of wavelengths which resonance is caused by other than a limit cycle generated due to the presence of a severe nonlearity in a control loop.

21. A method as defined in claim 20 in which said determining step is comprised of processing the signal values:
(modified index) = (raw index) x (1 - proportion of the tracking error variance associated with a resonance suspected of being imposed externally to a control loop).

22. A method as defined in claim 1 further comprising in combination the method as defined in claim 3.

**Patentansprüche**

1. Verfahren zur Diagnosedifferenzierung zwischen zwei oder mehr möglichen Quellen einer Störung bei einem geschlossenen Regelkreis eines Prozeßregelungssystems, das mindestens einen geschlossenen Regelkreis enthält, umfassend das Messen eines Histogramms der Regelabweichung des genannten Regelkreises, das Bestimmen der Abweichung der Regelabweichung von einer Gaußverteilung und das Anzeigen einer Störung in dem Prozeß für den Fall, daß eine Abweichung der Regelabweichung von der Gaußverteilung vorgegebene Grenzwerte überschreitet, wobei die genannte Abweichung (K) dadurch gemessen wird, daß von der Höhe eines um Null zentrierten Regelabweichungs-Histogrammbalkens des genannten Histogramms die Anzahl von Stichproben multipliziert mit einer Fläche zwischen zwei Grenzwerten, durch die eine Normaldichte um den Mittelwert des genannten Histogramms festgelegt wird, abgezogen wird, und anschließendes Anzeigen einer Störung in dem Prozeß für den Fall, daß der Wert für K um einen vorgegebenen Betrag von 0 abweicht.

2. Verfahren nach Anspruch 1, wobei der Schritt des Anzeigens einer Störung ausgeführt wird durch:

(a) Erzeugen einer neuen Folge y(k), aus einer Folge x(k) von beobachteten Regelabweichungen x(k), wobei der Index k von 1 (dem Start der Folge) bis n (dem Ende der Folge) reicht, anhand der folgenden Regel:

wenn x(k) innerhalb des Mittelbalkens des Histogramms liegt, dann ist y(k): = 1, andernfalls y(k): = 0, danach wird der Stichprobenmittelwert von y von jedem Element y(k) subtrahiert,

(b) Berechnen einer Autokorrelationsfunktion der Folge y(k) bis zu einem festgesetzten Zeitabstand N, wobei R(j) eine Autokorrelationsfunktionsfolge ist, bei der j von -N bis +N reicht,

(c) Bestimmen der Varianz unter Verwendung der Transformation

$$Var(S) = \sum_{k=1}^{n-1} 2(n-k)R(k) + nR(0)$$

wobei R(.) die geschätzte Autokorrelationsfolge ist,
n die Anzahl der Stichproben ist,
S = die Summe der Folge y(k) vor dem Abziehen des Stichprobenmittelwertes bei (a) ist, welche der Höhe des Mittelbalkens des Histogramms entspricht, und der Erwartungswert von S gleich der Fläche unter der Gaußkurve im Bereich des Mittelbalkens des Histogramms multipliziert mit der Anzahl von Stichproben ist,

(d) Bestimmen eines Vertrauenswertes C,
wobei

$$C = nerf\left(\frac{x}{1.414}\right),$$

X = Absolutwert der Differenz von dem Erwartungswert von S
und
seinem berechneten Wert dividiert durch die geschätzte Standardabweichung von S ist, und

(e) Festlegen von Vertrauensbereichen und Ermitteln, ob C in den Bereichen enthalten ist.

3. Verfahren zur Diagnosedifferenzierung zwischen zwei oder mehr möglichen Quellen unzufriedenstellender Regelkreisleistung einer industriellen Maschine, die eine Vielzahl von Regelkreisen enthält, umfassend:

(a) gleichzeitiges Sammeln von Betriebsdaten, die Zeitreihen von Regelgrößen-Messungen und Regelkreis-Sollwerten enthalten, von festgelegten Regelkreisen, für einen Zeitraum, der mindestens etwa das hundertfache der längsten Zeitkonstante der festgelegten Regelkreise beträgt,

(b) Subtrahieren gemessener veränderlicher Daten von Sollwertdaten, um Regelabweichungen zu ermitteln,

(c) Bestimmen des Betrages, um den die beobachtete Varianz der Regelabweichung einen Mindestwert übersteigt, nachdem nichtlineare Elemente aus dem Regelkreis entfernt worden sind, wobei frühere Schätzwerte der Prozeßzeitkonstante und der Totzeit ausgenutzt werden, um einen Rohindex bereitzustellen,

(d) Prüfen auf etwaige Wechselwirkungen zwischen Regelkreisen, die einen Schätzwert des genannten Rohindex möglicherweise auf abnorme Weise übermäßig steigern,

(e) Bestimmen eines modifizierten Rohindex für einen bestimmten Regelkreis, für den Fall, daß die genannten übermäßig gesteigerten Schätzwerte ermittelt werden, und

(f) Unterscheiden zwischen Regelkreisen, die fehlerhaft funktionieren, solchen, die nicht fehlerhaft funktionieren, und solchen, die möglicherweise fehlerhaft funktionieren und durch wechselwirkende fehlerhaft funktionierende Regelkreise gestört werden, auf der Basis des Rohindex und des modifizierten Rohindex.

4. Verfahren nach Anspruch 1 oder 2, ferner umfassend:

(i) Berechnen des Histogramms der Regelabweichung für jeden Regelkreis des Systems,

(ii) Quantifizieren der Kurtosis eines jeden Histogramms durch Bestimmen der Höhe des Mittelbalkens des Histogramms relativ zu einer Erwartungshöhe, wobei die Erwartungshöhe bestimmt wird durch die Annahme, daß die Regelabweichung normal verteilt ist mit einem Stichproben-Mittelwert und einer Stichproben-Varianz,

(iii) Berechnen einer statistischen Signifikanz der genannten Kurtosis in einer Abwärtsrichtung, unter Berücksichtigung jeglicher Stichprobenkorrelationen von Regelabweichungs-Zeitreihen, und

(iv) Anzeigen der genannten statistischen Signifikanz als diagnostisches Maß.

5. Verfahren nach Anspruch 3, bei dem der genannte Rohindex (IN) dadurch bestimmt wird, daß die Regelabweichungsveränderung (O) in dem genannten Regelkreis beobachtet wird, eine Varianz bedingter Erwartung (V) aus den früheren Messungen und Stichproben bestimmt wird, und O/V verarbeitet wird, um IN zu erhalten.

6. Verfahren nach Anspruch 5, wobei V bestimmt wird durch:

(a) Subtrahieren einer gemessenen Größe von einem Sollwert, um eine Regelabweichung zu erhalten,

(b) Extrahieren von Daten für veränderliche Größen, die früher für den genannten Regelkreis gemessen wurden,

(c) für den Fall, daß eine Stichprobenzeit T der genannten veränderlichen Größe mindestens etwa 0,1 mal der dominierenden Offener-Regelkreis-Zeitkonstante des genannten Regelkreises ist, Herausfinden der besten Approximation eines Vektors von Regelabweichungsbeobachtungen mit Linearkombinationen von Regelabweichungen und sukzessiven, durch sukzessive Stichprobenperiodenverzögerungen verzögerte Regelabweichungen nach der Methode der kleinsten Quadrate, und

(d) für den Fall, daß die Stichprobenzeit der genannten veränderlichen Größe kleiner als etwa 0,1 mal der genannten dominierenden Regelkreis-Zeitkonstante ist, erneute Stichprobennahme der genannten veränderlichen Größe mit einem Stichprobennahmeabstand, der etwa 5 bis 10 mal kürzer ist als die genannte dominierende Offener-Regelkreis-Zeitkonstante, and anschließendes Herausfinden der besten Approximation nach der Methode der kleinsten Quadrate wie bei Schritt (c).

7. Verfahren nach Anspruch 6, bei dem der Schritt des Berechnens des Rohleistungsindex aus dem Bestimmen des Betrages besteht, um den die beobachtete Varianz einer Regelabweichung einen Mindestwert übersteigt, nachdem nichtlineare Elemente aus einem Regelkreis entfernt worden sind, aus früheren Schätzwerten der prozeß-verzögerten Zeitkonstante.

8. Verfahren nach Anspruch 6, bei dem der Schritt (d) daraus besteht, daß die genannte veränderliche Größe mit einem Anti-Aliasing-Filter digital gefiltert wird und die genannte veränderliche Größe mit einem längeren Stichprobennahmeabstand 1, der etwa 5 bis 10 mal kürzer als die Offener-Regelkreis-Zeitkonstante ist, emeut einer Stichprobennahme unterzogen wird, und Ausdrücken der genannten längeren Stichprobennahmeabstände als die genannten Stichprobennahmeabstände.

9. Verfahren nach Anspruch 8, bei dem eine Grenzfrequenz des Anti-Aliasing-Filters das 10 bis 20-fache des Kehrwerts der Offener-Regelkreis-Zeitkonstante in Radianten pro Stichprobe ist, und bei dem der Stichprobennahmeabstand der erneuten Stichprobe etwa 0,1 bis 0,2 mal eine geschätzte Prozeßzeitkonstante ist.

10. Verfahren nach Anspruch 6, umfassend den Schritt des Ermittelns der Existenz einer Drift der Regelabweichung unter Verwendung einer Statistik D, wobei D = Maximalwert von ($|m1|$, $|m3|$) ist, wobei $m1$ und $m3$ Mittelwerte des ersten Drittels und dritten Drittels einer Zeitreihe der genannten Regelabweichung sind, und das Bereitstellen eines Warnsignals, wenn D > Standardabweichung der Regelabweichung x $(12M/L)^{1/2}$ ist, wobei m eine vorgegebene große Zahl und L die Anzahl der Stichproben in der Zeitreihe ist.

11. Verfahren nach Anspruch 3, **gekennzeichnet, durch**

(a) in Zusammenhang mit einem Regelkreis aus einer Gruppe von Regelkreisen, die als möglicherweise fehlerhaft funktionierend angezeigt werden, Berechnen der schnellen Fourier Transformierten der Regelabweichung, und Filtern von Produkten der genannten Transformierten, um unechte Spitzen zu entfernen,

(b) Identifizieren von ersten und zweiten spektralen Spitzen, die mehr als eine Schwellenvarianz in einer vorgegebenen Bandbreite für den genannten Regelkreis beitragen,

(c) Auswählen eines anderen Regelkreises aus der genannten Gruppe von Regelkreisen und Wiederholen der Schritte (a) und (b), bis ein letzter Regelkreis aus der genannten Gruppe verarbeitet worden ist,

(d) Einteilen möglicherweise fehlerhaft funktionierender Regelkreise mit näherungsweise zusammenfallenden spektralen Spitzen in möglicherweise wechselwirkende Klassen, und

(e) Bestimmen eines modifizierten Leistungsindex für alle Regelkreise, die zu einer Klasse gehören.

12. Verfahren nach Anspruch 11, einschließlich des Ermitteins einer Drift der genannten Betriebsdaten, und ausgehend von einem Wert oder einem Trend der genannten Drift, des Anzeigens, ob ein Störungszustand vorliegt, und für den Fall, daß ein Störungszustand vorliegt, des Bereitstellens einer Warnungsanzeige.

13. Verfahren nach Anspruch 12, umfassend das Durchführen des Schrittes des Ermittelns der Existenz der genannten Drift durch das Bestimmen einer Statistik D für die Drift-Regelabweichung des genannten Regelkreises, wobei D = Maximalwert von ($|m1|$, ($|m3|$) ist, wobei m1 und m3 Mittelwerte des ersten Drittels und des dritten Drittels einer Zeitreihe der Regelabweichung sind, und des Anzeigens eines Störungszustandes, wenn D > Standardabweichung der Regelabweichung x $(12M/L)^{1/2}$ ist, wobei M eine vorgegebene große Zahl und L die Anzahl der Stichproben in der Regelabweichungs-Zeitreihe ist.

14. Verfahren nach Anspruch 3, **gekennzeichnet, durch**

(a) Aufspüren von Fehlervariationen schmaler spektraler Bandbreite in jedem der genannten vorgegebenen Regelkreise des genannten Prozesses,

(b) Vergleichen von spektralen Spitzen der genannten Fehlervariationen, um Übereinstimmungen von Spitzen festzustellen, die eine Wechselwirkung zwischen den genannten vorgegebenen Regelkreisen anzeigen, und

(c) Quantifizieren von Effekten der genannten Fehlervariationen, die die genannten Übereinstimmungen von Spitzen aufweisen, und resultierend Bestimmen einer Störung eines Regelkreises.

15. Verfahren nach Anspruch 14, das an jedem Regelkreis durchgeführt wird, der für fehlerhaft funktionierend erachtet wird,
bei dem der Schritt des Aufspürens einer Fehlervariation daraus besteht, daß man eine Fourier-Transformierte der genannten Regelabweichungsvariationen auswertet, Produkte der Fourier-Transformation fensterartig darstellt, ein Daniel-Fenster mit Bandbreite W Periodogramm-Ordinaten auswählt, so daß W die kleinste ganze Zahl ist, die $Wexp^W > L$ erfüllt,
und bei dem der Schritt des Vergleichens der spektralen Spitzen daraus besteht, daß man die Frequenz f1 eines ersten Maximalwertes des geschätzten Leistungsspektrums schätzt, eine Mittelfrequenz f2 irgendeiner Mittelspitze durch Prüfen auf einen zweiten Maximalwert unter solchen Frequenzen, die aus einem Intervall um den ersten Maximalwert herum ausgeschlossen sind, auswertet, daß man eine Varianz auswertet, die mit dem genannten ersten und dem genannten zweiten Maximalwert verknüpft ist, indem man die Fläche unter dem geschätzten Leistungsspektrum über ein Intervall festgesetzter Bandbreite um die genannten Frequenzen f1 und f2 berechnet, und daß man das Vorhandensein einer spektralen Resonanz bei einer entsprechenden Frequenz f1 oder f2 für den Fall anzeigt, daß eine der Varianzen vorgegebene Anteile einer Gesamtregelabweichungsvarianz übersteigt.

16. Verfahren nach Anspruch 15, umfassend den Schritt der Bildens von Klassen von Regelkreisen durch Zuordnen von Regelkreisen zu einer Klasse, in der die genannten Frequenzen f1 und f2 eines Regelkreises um einen kleinen vorgegebenen Betrag an einer der genannten f1 oder f2 eines anderen Regelkreises angrenzen.

17. Verfahren nach Anspruch 7, umfassend das Bestimmen einer Kategorie von Störungen eines Prozesses, der von der genannten industriellen Maschine durchgeführt wird, umfassend:

(a) Aufspüren von Fehlervariationen schmaler spektraler Bandbreite in jedem aus einer Mehrzahl von Regelkreisen in dem genannten Prozeß,

(b) Vergleichen von spektralen Spitzen der genannten Fehlervariationen, um Übereinstimmungen von Spitzen festzustellen, die eine Wechselwirkung zwischen den genannten mehrzahligen Regelkreisen anzeigen, und

(c) Quantifizieren von Effekten der genannten Fehlervariationen, die diese genannten Übereinstimmungen von Spitzen aufweisen, und resultierend Bestimmen einer Störung eines Regelkreises.

18. Verfahren nach Anspruch 17, das an jedem Regelkreis durchgeführt wird, der für fehlerhaft funktionierend erachtet wird,
bei dem der Schritt des Aufspürens der Fehlervariation daraus besteht, daß man eine Fourier-Transformierte der Regelabweichungsvariationen auswertet, Produkte der Fourier-Transformation fensterartig darstellt, ein Daniel-Fenster mit einer Bandbreite W Periodogramm-Ordinaten auswählt, so daß W die kleinste ganze Zahl ist, die Wexp$^W$ > L erfüllt,
und bei dem der Schritt des Vergleichens der spektralen Spitzen daraus besteht, daß man die Frequenz f1 eines ersten Maximalwertes des geschätzten Leistungsspektrums schätzt, eine Mittelfrequenz f2 irgendeiner Mittelspitze durch Prüfen auf einen zweiten Maximalwert unter solchen Frequenzen, die aus einem Intervall um den ersten Maximalwert herum ausgeschlossen sind, auswertet, daß man eine Varianz auswertet, die mit dem ersten und dem zweiten Maximalwert verknüpft ist, indem man die Fläche unter dem geschätzten Leistungsspektrum über ein Intervall festgesetzter Bandbreite um die genannten Frequenzen f1 und f2 berechnet, und daß man das Vorhandensein einer spektralen Resonanz bei einer entsprechenden Frequenz f1 oder f2 für den Fall anzeigt, daß irgendeine Varianz vorgegebene Anteile der Gesamtregelabweichungsvarianz übersteigt.

19. Verfahren nach Anspruch 18, umfassend den Schritt des Bildens von Klassen von Regelkreisen durch Zuordnen von Regelkreisen zu einer Klasse, in der die genannten Frequenzen f1 und f2 eines Regelkreises an eine der genannten f1 oder f2 eines anderen Regelkreises um einen kleinen vorgegebenen Betrag angrenzen.

20. Verfahren nach Anspruch 19, umfassend die Schritte des Bestimmens eines modifizierten Leistungsindex als ein Bestimmungsmittel einer Störung für Regelkreise, die entweder zu einer Klasse von möglicherweise wechselwirkenden Regelkreisen oder zu einer Klasse von Regelkreisen gehören, bei denen eine Resonanz festgestellt wird, die außerhalb eines vorgegebenen Bereiches von Wellenlängen liegt, wobei die Resonanz durch etwas anderes verursacht wird als einen Grenzzyklus, der aufgrund des Vorhandenseins einer starken Nichtlinearität in einem Regelkreis erzeugt wird.

21. Verfahren nach Anspruch 20, bei dem der genannte Schritt des Bestimmens aus dem Verarbeiten der Signalwerte besteht: (modifizierter Index) = Rohindex) x (1 - Anteil der Regelabweichungsvarianz, die mit einer Resonanz verknüpft ist, von der man vermutet, daß sie einem Regelkreis von außen auferlegt worden ist).

22. Verfahren nach Anspruch 1, ferner in Kombination umfassend das Verfahren nach Anspruch 3.


**Revendications**

1. Procédé de différenciation diagnostique entre deux sources potentielles, ou plus, de défaut de fonctionnement concernant une boucle de commande en boucle fermée d'un système de commande de processus qui comporte au moins une boucle de commande en boucle fermée, comprenant la mesure d'un histogramme d'erreur de suivi de la dite boucle de commande, la détermination d'une distorsion de la dite erreur de suivi par rapport à une distribution de Gauss, et l'indication d'un défaut de fonctionnement du processus dans le cas où un écart par rapport à la dite distribution de Gauss de la dite erreur de suivi dépasse des limites prédéterminées, dans lequel la dite distorsion (K) est mesurée en soustrayant d'une hauteur d'une barre d'histogramme d'erreur de suivi du dit histogramme, centrée sur zéro, un nombre d'échantillons multiplié par une surface entre deux limites définissant une densité normale autour d'une moyenne du dit histogramme, un défaut de fonctionnement du processus étant ensuite indiqué dans le cas où une valeur de K diffère de zéro, d'une quantité prédéterminée.

2. Procédé selon la revendication 1, dans lequel l'étape d'indication de défaut de fonctionnement est effectuée comme suit :

(a) si une séquence d'erreurs de suivi observées est x(k), où l'indice (k) va de 1 (le début de la séquence) à n (la fin de la séquence), on génère une nouvelle séquence y(k) par la règle ci-après :

si x(k) est dans la barre centrale de l'histogramme, alors y(k):=1, sinon y(k):=0, et on soustrait alors la moyenne des échantillons de y de chaque élément de y(k),

(b) on calcule une fonction d'autocorrélation pour la séquence y(k) jusqu'à un décalage fixe N, de sorte qu'une séquence de fonction d'autocorrélation est R(j) où j va de -N à +N,
(c) on détermine une variance au moyen de la transformation

$$Var(S) = \sum_{k=1}^{n-1} 2(n-k)R(k) + nR(0)$$

où R(.) est la séquence d'autocorrélation estimée,
    n est le nombre d'échantillons,
    S est la somme de la séquence y(k) avant la soustraction de la moyenne des échantillons dans (a), qui est la hauteur de la barre centrale de l'histogramme, et la valeur attendue de S est égale à la surface sous la courbe de Gauss dans la plage de la barre centrale d'histogramme multipliée par le nombre d'échantillons,
(d) on détermine une valeur de confiance C, où

$$C = nerf(\frac{X}{1.414}),$$

    X = valeur absolue de la différence entre la valeur attendue de S et sa valeur calculée divisée par l'écart standard estimé de S, et
(e) on établit des bandes de confiance et on détermine si C est contenu dans les bandes.

3. Procédé de différenciation diagnostique entre deux sources potentielles ou plus de fonctionnement non satisfaisant d'une boucle de commande d'une machine industrielle qui inclut une pluralité de boucles de commande en boucle fermée, comprenant :

(a) la collecte de données de fonctionnement comprenant des séries chronologiques de mesures d'une variable contrôlée et de points de consigne de boucle de commande simultanément à partir de boucles de commande prédéterminées, pendant une période d'au moins 100 fois environ une plus longue constante de temps des dites boucles de commande prédéterminées,
(b) la soustraction des données de variable mesurées des dites données de point de consigne, pour obtenir des erreurs de suivi,
(c) la détermination d'une grandeur dont la variance observée d'une erreur de suivi dépasse une valeur minimale, après élimination des éléments non linéaires d'une boucle, et l'exploitation d'estimations antérieures de la constante de temps et du temps mort du processus, pour obtenir un indice brut,
(d) le test des interactions éventuelles entre boucles de commande, qui peuvent gonfler d'une manière anormale une estimation du dit indice brut,
(e) la détermination d'un indice brut modifié pour une boucle particulière dans le cas où on détecte des dites estimations gonflées, et
(f) la différenciation, entre les boucles de commande, de celles qui sont en défaut de fonctionnement, de celles qui ne sont pas en défaut de fonctionnement et de celles qui sont éventuellement en défaut de fonctionnement et qui sont perturbées par interaction avec des boucles de commande en défaut de fonctionnement, sur la base du dit indice brut et du dit indice brut modifié.

4. Procédé selon la revendication 1 ou 2, comprenant en outre :

(i) le calcul du dit histogramme de l'erreur de suivi pour chaque boucle du dit système,
(ii) la quantification de l'aplatissement de chaque histogramme par détermination de la hauteur d'une barre centrale du dit histogramme par rapport à une hauteur attendue, la hauteur attendue étant déterminée par une hypothèse qu'une erreur de suivi est normalement distribuée avec une moyenne d'échantillon et une variance d'échantillon,
(iii) le calcul d'une signification statistique du dit aplatissement dans une direction descendante, en tenant compte de toute corrélation inter-échantillon des séries chronologiques d'erreur de suivi, et
(iv) l'affichage de la dite signification statistique comme une indication de mesure diagnostique.

**5.** Procédé selon la revendication 3, dans lequel le dit indice brut (IN) est déterminé par observation d'une variation d'erreur de suivi (O) dans la dite boucle, détermination d'une variance d'une prévision conditionnelle (V) à partir de mesures et d'échantillons antérieurs, et traitement de O/V pour obtenir IN.

**6.** Procédé selon la revendication 5, dans lequel V est déterminé par :

(a) soustraction d'une variable mesurée d'un point de consigne pour obtenir une erreur de suivi,
(b) extraction de données antérieures de la variable mesurée pour la dite boucle,
(c) dans le cas où un temps d'échantillon T de la dite variable est au moins approximativement 0,1 fois la constante de temps en boucle ouverte dominante de la dite boucle, recherche de la meilleure approximation des moindres carrés d'un vecteur d'observations d'erreur de suivi avec des combinaisons linéaires d'erreurs de suivi et d'erreurs de suivi successives retardées par des retards de périodes d'échantillon successives, et
(d) dans le cas où un temps d'échantillon de la dite variable est plus petit qu'environ 0,1 fois la dite constante de temps de boucle dominante, nouvel échantillonnage de la dite variable à un intervalle d'échantillon environ 5 à 10 fois plus court que la dite constante de temps en boucle ouverte dominante, puis recherche de la meilleure approximation de moindres carrés comme dans l'étape (c).

**7.** Procédé selon la revendication 6, dans lequel l'étape de calcul du dit indice de performance brut comprend la détermination d'une quantité par laquelle la variance observée d'une erreur de suivi dépasse une valeur minimale, après élimination des éléments non linéaires d'une boucle, à partir d'estimations antérieures d'une constante de temps retardée du processus.

**8.** Procédé selon la revendication 6, dans lequel l'étape (d) comprend un filtrage anti-crénelage numérique de la dite variable et un nouvel échantillonnage de la dite variable à un plus long intervalle d'échantillon I qui est approximativement 5 à 10 fois plus court que la dite constante de temps en boucle ouverte, et l' expression des dits plus longs intervalles d'échantillon comme dits intervalles d'échantillon.

**9.** Procédé selon la revendication 8, dans lequel une fréquence de coupure du filtre anti-crénelage est comprise entre 10 et 20 fois l'inverse de la constante de temps en boucle ouverte, en radians par échantillon, et dans lequel l'intervalle du nouvel échantillonnage est approximativement de 0,1 à 0,2 fois une constante de temps de processus estimée.

**10.** Procédé selon la revendication 6; incluant l'étape de détermination de l'existence d'une dérive de l'erreur de suivi au moyen d'une statistique D, dans lequel D est égal au maximum de ($|m1|$, $|m3|$) où $m1$ et $m3$ sont les moyennes du premier tiers et du troisième tiers d'une série chronologique de la dite erreur de suivi, et de fourniture d'un signal d'alerte si D est plus grand que l'écart standard de l'erreur de suivi x $(12M/L)^{1/2}$, où M est un grand nombre prédéterminé et L est le nombre d'échantillons dans la série chronologique.

**11.** Procédé selon la revendication 3, **caractérisé en ce que** :

(a) en relation à une boucle de commande d'un groupe de boucles de commande indiquées comme potentiellement en défaut de fonctionnement, on calcule une transformation rapide de Fourier d'une erreur de suivi et on filtre les produits de la dite transformation pour éliminer les pics parasites,
(b) on identifie des pics spectraux primaire et secondaire contribuant à plus qu'une varlance de seuil dans une largeur de bande prédéterminée, pour la dite boucle de commande,
(c) on choisit une autre boucle de commande dans le dit groupe de boucles de commande et on répète les étapes (a) et (b) jusqu'à ce qu'une dernière boucle de commande dans le dit groupe ait été traitée,
(d) on sépare les boucles potentiellement en défaut de fonctionnement ayant des pics spectraux approxlmativement en coïncidence, en classes éventuellement en interaction, et
(e) on détermine un indice de performance modifié pour toutes les boucles de commande appartenant à une classe.

**12.** Procédé selon la revendication 11, incluant la détermination d'une dérive des dites données de fonctionnement, et l'indication, à partir d'une valeur ou d'une tendance de la dite dérive, de ce qu'il existe ou non un état de défaillance, et, dans le cas où un état de défaillance existe, la fourniture d'une indication d'alerte.

**13.** Procédé selon la revendication 12; incluant l'exécution de l'étape de détermination de la présence de la dite dérive par détermination d'une statistique D pour la dérive de l'erreur de suivi de la dite boucle, où D est égal au maximum de (|m1|, |m3|), et m1 et m3 sont les moyennes d'un premier tiers et d'un troisième tiers d'une série chronologique de l'erreur de suivi, et l'indication d'un état de défaut si D est plus grand que l'écart standard de l'erreur de suivi x $(12M/L)^{1/2}$ où M est un grand nombre prédéterminé et L est le nombre d'échantillons dans la série chronologique de l'erreur de suivi.

14. Procédé selon la revendication 3, **caractérisé par** :

(a) l'examen des variations d'erreur de suivi ayant une étroite largeur de bande spectrale, dans chacune des dites boucles de commande prédéterminées du dit processus,
(b) la comparaison des pics spectraux des dites variations d'erreur pour détecter les coïncidences de pics qui sont indicatives d'une interaction entre les dites boucles de commande prédéterminées, et
(c) la quantification des effets des dites variations d'erreur qui présentent les dites coïncidences de pics et, comme résultat, la détermination d'un défaut de fonctionnement d'une boucle de commande.

15. Procédé selon la revendication 14, effectué sur chaque boucle de commande supposée être en défaut de fonctionnement,
dans lequel la dite étape d'examen des variations d'erreur de suivi comprend une évaluation d'une transformation de Fourler des dites variations d'erreur de suivi, l'établissement de fenêtres des produits de la transformation de Fourier, le choix d'une fenêtre de Daniel ayant une ordonnée de périodogramme de largeur de bande W telle que W est un plus petit entier qui satisfait à $Wexp^W > L$,
et dans lequel l'étape de comparaison des pics spectraux comprend l'estimation de la fréquence f1 d'une première valeur maximale du spectre d'énergie estimé, l'évaluation d'une fréquence centrale f2 de tout pic central par essai pour une deuxième valeur maximale parmi des fréquences exclues d'un intervalle autour de la première valeur maximale, l'évaluation d'une variance associée aux dites valeurs maximales primaire et secondaire par calcul d'une surface sous l'estimation de spectre d'énergie dans un intervalle de largeur de bande fixe autour des dites fréquences f1 et f2, et l'indication de la présence d'une résonance spectrale à une fréquence correspondante f1 ou f2 dans le cas ou l'une ou l'autre des variances dépasse des proportions prédéterminées de la variance d'erreur de suivi globale.

16. Procédé selon la revendication 15, incluant l'étape de formation de classes de boucles de commande par association de boucles de commande dans une classe, dans lequel les dites fréquences f1 et f2 d'une boucle de commande sont proches d'une quelconque des dites fréquences f1 ou f2 d'une autre boucle de commande, d'une petite quantité prédéterminée.

17. Procédé selon la revendication 7, incluant la détermination d'une catégorie de défaut de fonctionnement d'un processus exécuté par la dite machine industrielle, comprenant:

(a) l'examen des variations d'erreur de suivi ayant une largeur de bande spectrale étroite, dans chacune d'une pluralité de boucles de commande du dit processus,
(b) la comparaison des pics spectraux des dites variations d'erreur pour détecter des coïncidences de pics qui sont indicatives d'une interaction entre les dites plusieurs boucles de commande, et
(c) la quantification des effets des dites variations d'erreur qui ont les dites coïncidences de pics et, comme résultat, la détermination d'un défaut de fonctionnement d'une boucle de commande.

18. Procédé selon la revendication 17, appliqué sur chaque boucle de commande jugée comme étant en défaut de fonctionnement,
dans lequel la dite étape d'examen des variations d'erreur comprend l'évaluation d'une transformation de Fourier des dites variations d'erreur de suivi, l'établissement de fenêtres des produits de la transformation de Fourier, le choix d'une fenêtre de Daniel ayant une ordonnée dé périodogramme de largeur de bande W telle que W est un plus petit entier qui satisfait à $Wexp^W > L$,
et dans lequel l'étape de comparaison des pics spectraux comprend l'estimation de la fréquence f1 d'un premier maximum du spectre d'énergie estimé, l'évaluation d'une fréquence centrale f2 de tout pic central par essai pour un deuxième maximum dans des fréquences exclues d'un intervalle autour du premier maximum, l'évaluation d'une variance associée aux dits maxima primaire et secondaire par calcul d'une surface sous l'estimation de spectre d'énergie dans un intervalle de largeur de bande fixe autour des dites fréquences f1 et f2, et l'indication de la présence d'une résonance spectrale à une fréquence correspondante f1 ou f2 dans le cas où l'une ou l'autre variance dépasse des proportions prédéterminées de la variance d'erreur de suivi globale.

**19.** Procédé selon la revendication 18, incluant l'étape de formation de classes de boucles de commande par association de boucles de commande dans une classe, dans lequel les dites fréquences f1 et f2 d'une boucle de commande sont proches de l'une ou l'autre des dites fréquences f1 ou f2 d'une autre boucle de commande, d'une petite quantité prédéterminée.

**20.** Procédé selon la revendication 19, incluant les étapes de détermination d'un indice de performance modifie comme détermination d'un défaut de fonctionnement pour les boucles de commande appartenant à une classe de boucles de commande potentiellement en interaction ou à une classe de boucles de commande dans laquelle une résonance est identifiée comme étant en dehors d'une plage prédéterminée de longueurs d'onde, cette résonance étant provoquée par autre chose qu'un cycle limite engendré du fait de la présence d'une forte non linéarité dans une boucle de commande.

**21.** Procédé selon la revendication 20, dans lequel la dite étape de détermination comprend le traitement des valeurs de signal : (indice modifié) = (indice brut) x (1 - proportion de la variance d'erreur de suivi associée à une résonance suspectée d'être imposée de façon extérieure à une boucle de commande).

**22.** Procédé selon la revendication 1, comprenant en outre en combinaison le procédé selon la revendication 3.

## FIG. I

SUBTRACT MEASURED VARIABLE
FROM SET POINT TO OBTAIN
TRACKING ERROR

EXTRACT PRIOR INFORMATION
FOR CURRENT LOOP

IS SAMPLE TIME <
0.1 x OPEN-LOOP TIME CONSTANT

YES

NO

DIGITALY ANTIALIAS FILTER AND
RESAMPLE AT A SAMPLE INTERVAL
5-10 TIMES SHORTER THAN
OPEN-LOOP TIME CONSTANT

EXPRESS DELAY d IN
SAMPLE PERIODS

FIND BEST LEAST SQUARES APPROXIMATION OF VECTOR
OF TRACKING ERROR OBSERVATIORS WITH LINEAR
COMBINATIONS OF:

TRACKING ERROR
$(TRACKING\ ERROR)^2$
$(TRACKING\ ERROR)^3$
SIGN OF CHANGE IN
TRACKING ERROR

DELAYED BY $d, d+1, d+2, ...$
... SAMPLES

INDEX OF PERFORMANCE FOR LOOP=

$$\frac{SAMPLE\ TRACKING\ ERROR\ VARIANCE}{BEST\ LEAST\ SQUARES\ APPROXIMATION\ ERROR}$$

# FIG. 2

OBTAIN LIST OF CONTROL LOOP
NAMES FOR CURRENT GROUP

n = I

n = n+I

OBTAIN PRIOR AND OPERATING DATA
FOR nth CONTROL LOOP

DOES TREND TEST INDICATE
AN UPSET CONDITION?　　YES

NO

ANTIALIAS FILTER
AND RESAMPLE

CALCULATE RAW PERFORMANCE INDEX FOR
nth LOOP. IDENTIFY LOOP WITH  INDEX >
THRESHOLD "POTENTIALLY MALFUNCTIONING"

IF LOOP IS "POTENTIALLY MALFUNCTIONING"COMPUTE
FFT OF TRACKING ERROR AND FILTER USING VAN NESS
FORMULA TO REMOVE SPURIOUS PEAKS

IDENTIFY PRIMARY AND SECONDARY SPECTRAL PEAKS
CONSTITUTING MORE THAN THE THRESHOLD VARIANCE
IN THE PRESET BANDWIDTH FOR nth LOOP

IS THIS THE LAST
LOOP IN THE LIST?　　NO

YES

DIVIDE"POTENTIALLY  MALFUNCTIONING"LOOPS WITH APPROX. COINCIDENT
SPECTRAL PEAKS INTO POSSIBLY INTERACTING EQUIVALENCE CLASSES

FOR ALL LOOPS BELONGING TO AN EQUIVALENCE CLASS
CALCULATE THE MODIFIED INDEX

APPLY HISTOGRAM TEST TO DETERMINE CATEGORY OF MALFUNCTION
FOR EACH LOOP DESIGNATED "POTENTIALLY MALFUNCTIONING"

FOR LOOPS IN AN EQUIVALENCE CLASS WHERE ONE OF THE RESO-
NANCES IS OUTSIDE THE PRESET RANGE (IF APPLICABLE) AND THE
CAUSE IS IDENTIFIED AS LINEAR CORRECT THE RAW INDEX USING
MODIFIED INDEX = INDEX x (I-PROPORTION OF TRACKING  ERROR
VARIANCE ASSOCIATED WITH RESONANCE SUSPECTED OF BEING
IMPOSED EXTERNALLY)

FIG. 3

KURTOSIS STATISTIC = DIFFERENCE
BETWEEN THE CENTRE BAR AND ITS EXPECTED
HEIGHT UNDER THE NULL HYPOTHESIS

FIG. 4

|  | CONTROL LOOP 1 | CONTROL LOOP 2 | CONTROL LOOP 3 | CONTROL LOOP 4 |
|---|---|---|---|---|
| INDEX | 4.2 | 2.9 | 9.6 | 4.8 |
| PRIMARY RESONANT FREQUENCY | 0.01 Hz | 0.034 Hz | 0.3 Hz | 0.012 Hz |
| SECONDARY RESONANT FREQUENCY | N/A | N/A | 0.01 Hz | 0.08 Hz |

EQUIVALENCE CLASS 1

CONTROL LOOP 1
CONTROL LOOP 2
CONTROL LOOP 4

EQUIVALENCE CLASS 2

CONTROL LOOP 3

N/A = NOT APPLICABLE BECAUSE VARIANCE ASSOCIATED WITH THE SECOND PEAK IS LESS THAN THE PRESET THRESHOLD AND THE RESPONANCE IS NOT SIGNIFICANT.

FIG. 5

EP 0 907 913 B1

PAPRICAN/AVENOR LOOP PERFORMANCE EVALUATION PROJECT
SUMMARY OF RESULTS FOR THE GROUP group11.txt

INTERACTIONS BETWEEN TWO OR MORE LOOPS ARE SUSPECTED.
POSSIBLY INTERACTING LOOPS HAVE BEEN GROUPED TOGETHER,
AND TAGS WITH HIGHER MODIFIED INDICES WITHIN EACH GROUP
ARE MORE LIKELY A SOURCE OF MALFUNCTION AND SHOULD BE
CHECKED FIRST.

| TAG [1] | MOD. IND. | IND. [2] | STD [3] | LIKELY CAUSE [4] |
|---|---|---|---|---|
| GROUP 1 | | | | |
| PIC425 | 14.67 | 53.94 | 0.067081 | TUNING/INTERACTION |
| PIC424 | 114.3 | 47.55 | 0.116640 | ACTUATOR/SENSOR |
| PIC436 | 1.38 | 3.99 | 0.012283 | TUNING/INTERACTION |

EQUIVALENCE CLASS OF POSSIBLY INTERACTING LOOPS

THE FOLLOWING LOOP(S) ARE JUDGED TO BE
**INDIVIDUALLY** MALFUNCTIONING:

| TAG | IND. | STD | LIKELY CAUSE |
|---|---|---|---|
| PIC390 | 17.29 | 0.06 | TUNING/INTERACTION |

[5] **TREND DETECTED** (INDEX MAY BE INFLATED)

LEGEND

[1] MODIFIED PERFORMANCE INDEX: THE LARGER THIS NUMBER, THE
MORE LIKELY THE TAG IS TO BE A SOURCE OF A MALFUNCTION.

[2] RAW PERFORMANCE INDEX

[3] RAW STANDARD DEVIATION OF TRACKING ERROR

[4] DIAGNOSTIC INDICATION

[5] WARNINGS THAT INDICATE MALFUNCTION MAY BE CAUSED BY
AN UPSET CONDITION RATHER THAN A PROBLEM WITH THE
CONTROL

PIC425: AUTO SLICE VACUUM
PIC424: TRANSFER BOX VACUUM
PIC436: FOUR DRINIER VACUUM HEADER
PIC390: ANTI-BLOW BOX VACUUM

FIG. 6

FIG. 7

VARIANCE=1.7le-4
INDEX OF
PERFORMANCE=
2.04

FIG. 8A

VARIANCE=5.le-5
ACTUAL RATIO OF
VARIANCES=3.36

FIG. 8B

FIG. 9A

FIG. 9B

EP 0 907 913 B1

FIG. 10

FIG. 11

PLUG SCREW FEEDER LEVEL TIME SERIES

FIG. 12

EP 0 907 913 B1

HISTOGRAM OF PREHEATER LEVEL
TRACKING ERROR TIME-SERIES

FIG. 13

LOCAL CONTROL UNIT 103

THICK STOCK AREA

THIN STOCK AREA

FORMING SECTION

DRYER SECTION

LOCAL CONTROL UNIT

105

103

101

105

4-20 MA CONNECTION

LOCAL CONTROL UNIT

DISTRIBUTED CONTROL
SYSTEM BUS

FIG. 14A

COMPUTER

103

107 COMPUTER GATEWAY

109 NETWORK LINK

111

EP 0 907 913 B1

LOOP 1

MEASURED VALUE          SET POINT

ANALOG TO DIGITAL CONVERTER — 113

DIGITAL BUFFER TO STORE LAST N SAMPLES — 115

⊖ 117

DIAGNOSTIC
CALCULATION
(SEE FIG. 15) — 119

SPECTRAL
PEAK DETECTOR
(SEE FIG. 17) — 123

PERFORMANCE
INDEX CALCULATION
(SEE FIG. 16) — 121

VARIANCE          PEAKS

PEAKS

TO FIG. 14B (CONTINUED)

SWITCH 1     SWITCH 2

HIGH
CONFIDENCE
LIMIT — 133

⊕ ADDER
150

< — 127

> — 125

LOW
CONFIDENCE
LIMIT — 131

⊖
151

⊗
152

149

135          129

153

INDEX OF
PERFORMANCE

EXCLUSIVE
OR

MODIFIED INDEX
OF PERFORMANCE

NOR — 145          AND — 137

143

INDICATE LINEAR MALFUNCTION

147          141

INDICATE NO STATISTICAL SIGNIFICANCE

INDICATE NON-LINEAR MALFUNCTION

FIG. 14B

## LOOP n

MEASURED VALUE      SET POINT

ANALOG TO DIGITAL CONVERTER — 113

DIGITAL BUFFER TO STORE LAST N SAMPLES — 115

( — ) 117

DIAGNOSTIC CALCULATION (SEE FIG. 15)

SPECTRAL PEAK DETECTOR (SEE FIG. 17)

PERFORMANCE INDEX CALCULATION (SEE FIG. 16)

FROM FIG. 14B

GROUP LOGIC BOX

155

SWITCH 1    SWITCH 2

( + )

LOW CONFIDENCE LIMIT

( > )

1   ( × )

HIGH CONFIDENCE LIMIT

( > )

NOT

AND

NOT

DISPLAY IF INDEX >THRESHOLD

INDEX OF PERFORMANCE

MODIFIED INDEX OF PERFORMANCE

INDICATE NON-LINEAR MALFUNCTION

INDICATE NO STATISTICAL SIGNIFICANCE

INDICATE LINEAR MALFUNCTION

## FIG. 14B (CONTINUED)

FIG. 15

FIG. 16

DATA INPUT

177 — BUFFER WITH EXTERNAL RECALL AND CLEAR OPTION

179 — SQUARER

181 — SIGN DETECTOR:
1 IF INPUT > 0
-1 IF INPUT < 0

183 — MULTIPLY BY 1

185A — DELAY d+1

185B — DELAY d+1

185C — DELAY d+1

187 — x a7

187 — x a4

187 — x a1

189

DELAY

DELAY

DELAY

187 — x a8

187 — x a5

187 — x a2

189

189

DELAY

DELAY

DELAY

187 — x a9

187 — x a6

187 — x a3

189

189

192 — RMS SQUARED MULTIPLIER

191 — RMS SQUARED

189 — OPTIMIZER: OUTPUTS ARE VARIED TO MINIMIZE INPUT

194

193 — DIVIDE INPUT 1 BY INPUT 2 WHEN BUFFER IS CLEARED

CLEAR

RECALL/CLEAR/STANDBY SIGNAL TRIGGERED EACH OPTIMIZATION STEP

OUTPUT: INDEX OF PERFORMANCE

EP 0 907 913 B1

FIG. 17

FREQUENCIES OF SECONDARY AND PRIMARY SPECTRAL PEAKS

VARIANCE PROPORTION OF PRIMARY AND SECONDARY SPECTRAL PEAKS

EP 0 907 913 B1